# EUROPEAN PATENT SPECIFICATION

(11) **EP 3 845 440 B1**
(45) Date of publication and mention of the grant of the patent: **13.11.2024**
(21) Application number: 19854085.8
(22) Date of filing: 08.04.2019
(51) Int. Cl.: E05B 79/04, E05B 83/24

(54) **HOOD LOCK DEVICE ATTACHMENT STRUCTURE**
BEFESTIGUNGSSTRUKTUR EINER HAUBENVERRIEGELUNG
STRUCTURE DE FIXATION DE DISPOSITIF DE VERROUILLAGE DE CAPOT

(30) Priority: 31.08.2018 JP 2018162297; 31.08.2018 JP 2018162298
(43) Date of publication of application: 07.07.2021
(73) Proprietor: Toyoda Iron Works Co., Ltd., Toyota-shi, Aichi 471-8507 (JP)
(72) Inventor: HIROSE, Masamori, Toyota-shi, Aichi 471-8507 (JP); MIYAKE, Satoru, Toyota-shi, Aichi 471-8507 (JP)
(74) Representative: Bals & Vogel Patentanwälte PartGmbB
(86) International application number: PCT/JP2019/015309
(87) International publication number: WO 2020/044647

(56) References cited:
- GB-A- 2 321 920
- JP-A- 2004 161 264
- JP-A- 2018 030 482
- JP-A- H08 258 745
- JP-A- H08 258 745
- JP-U- S 578 263
- JP-U- S 578 263
- JP-U- S59 188 261

## Description

### TECHNICAL FIELD

The present invention relates to an attachment structure of a hood lock device.

### BACKGROUND ART

A vehicle such as an automobile often includes a hood that opens and closes the engine compartment and a hood lock device that locks the hood in a state in which the hood is closed. The hood lock device is arranged on an upper edge of a vehicle front part. For example, the hood lock device is arranged on an upper edge of a support of a radiator core support. The hood lock device is configured to catch and lock a hook-shaped hood striker projecting from a lower surface of the hood.

It has been suggested to adjust an attachment position of the hood lock device for appropriate locking (for example, Patent Document 1).

In Patent Document 1, a bracket for fixing the hood lock device is welded (joined) onto the radiator core support. The position of the hood lock device is adjusted by adjusting a joint position of the bracket relative to the radiator core support.

In Patent Document 1, the hood lock device is attached, for example, in the following manner. First, the position of the hood lock device (specifically, bracket) is adjusted relative to the radiator core support so that the hood striker is appropriately engaged with the hood lock device. Then, a technician holds the bracket and keeps the bracket in a position-adjusted state to spot-weld and fix the bracket to the radiator core support. Subsequently, the hood lock device is fixed to the radiator core support by the bracket. The hood lock device is attached to the radiator core support in this manner so that the hood lock device can lock the hood in the closed state.

### PRIOR ART DOCUMENT

### Patent Document

Patent Document 1: Japanese Laid-Open Patent Publication No. 2012-126309 Document JPS578263U discloses an attachment structure which comprises two elongated holes in a bracket, each receiving a retaining piece of a hood lock device for maintaining its position.

### SUMMARY OF THE INVENTION

### Problems that the Invention is to Solve

With the above-described attachment structure of a hood lock device, the series of operations for attaching the hood lock device is complicated.

The objective of the present invention is to provide an attachment structure of a hood lock device that facilitates the attachment operation.

### Means for Solving the Problems

In the present invention, an attachment structure of a hood lock device is provided. The hood lock device is configured to be fastened to an attachment portion arranged on a vehicle main body. Further, the hood lock device is configured to be engaged with a hood striker arranged on an inner surface of a hood of a vehicle to lock the hood in a closed state. The attachment structure includes at least one tentative attachment portion configured to tentatively attach the hood lock device to the attachment portion using a fitting force in a state in which the attachment portion and the hood lock device are movable relative to each other in a vehicle transverse direction.

### BRIEF DESCRIPTION OF THE DRAWINGS

Fig. 1 is a front view of a vehicle to which an attachment structure of a hood lock device in accordance with a first embodiment is applied.
Fig. 2 is a front view of the hood lock device and its periphery in accordance with the first embodiment.
Fig. 3 is an exploded perspective view of the hood lock device and its periphery in accordance with the first embodiment.
Fig. 4 is a cross-sectional side view of a fastening portion and its periphery in accordance with the first embodiment.
Fig. 5 is a front view showing one example of the positional relationship of a base of the hood lock device and a hood striker when adjusting the position of the hood lock device in accordance with the first embodiment.
Fig. 6 is a perspective view of a hood lock device and its periphery in accordance with a second embodiment.
Fig. 7 is a cross-sectional side view of a fastening portion and its periphery in accordance with the second embodiment.
Fig. 8 is a perspective view of a hood lock device and its periphery in accordance with a third embodiment.
Fig. 9 is a cross-sectional side view of a fastening portion and its periphery in accordance with the third embodiment.
Fig. 10 is a perspective view of a hood lock device and its periphery in accordance with a fourth embodiment.
Fig. 11 is a plan view of engagement pieces and its periphery in accordance with the fourth embodiment.
Fig. 12 is an exploded perspective view of the hood lock device and its periphery in accordance with the fourth embodiment.
Fig. 13 is a cross-sectional side view of a fastening portion and its periphery in accordance with the fourth embodiment.
Fig. 14 is a perspective view of a hood lock device and its periphery in accordance with a fifth embodiment.
Fig. 15 is an exploded perspective view of the hood lock device and its periphery in accordance with the fifth embodiment.
Fig. 16 is a cross-sectional side view of a fastening portion and its periphery in accordance with the fifth embodiment.
Fig. 17 is an exploded perspective view of a hood lock device and its periphery in accordance with a sixth embodiment.
Fig. 18 is a perspective view of the hood lock device and its periphery in accordance with the sixth embodiment.
Fig. 19 is an exploded perspective view of a hood lock device and its periphery in accordance with a seventh embodiment.
Fig. 20 is a perspective view of the hood lock device and its periphery in accordance with the seventh embodiment.
Fig. 21 is a perspective view of a hood lock device and its periphery in accordance with an eighth embodiment.
Fig. 22 is an exploded perspective view of the hood lock device and its periphery in accordance with the eighth embodiment.
Figs. 23A and 23B are cross-sectional plan views of a pocket and its periphery in accordance with the eighth embodiment.
Fig. 24 is a front view of a hood lock device and its periphery in accordance with a ninth embodiment.
Fig. 25 is an exploded perspective view of the hood lock device and its periphery in accordance with the ninth embodiment.
Fig. 26 is an enlarged perspective view showing a left fitting projection and its periphery of the ninth embodiment.
Fig. 27 is an enlarged cross-sectional side view showing a fitting projection and its periphery of the ninth embodiment.
Fig. 28 is a front view showing one example of the positional relationship of a base of the hood lock device and a hood striker when adjusting the position of the hood lock device in accordance with the ninth embodiment.
Fig. 29 is a front view of a hood lock device and its periphery in accordance with a tenth embodiment.
Fig. 30 is an enlarged perspective view showing a right fitting projection and its periphery of the tenth embodiment.
Fig. 31 is an enlarged perspective view showing a right fitting projection and its periphery of an eleventh embodiment.
Fig. 32 is an exploded perspective view of a hood lock device and its periphery in accordance with the eleventh embodiment.

### MODES FOR CARRYING OUT THE INVENTION

### First Embodiment

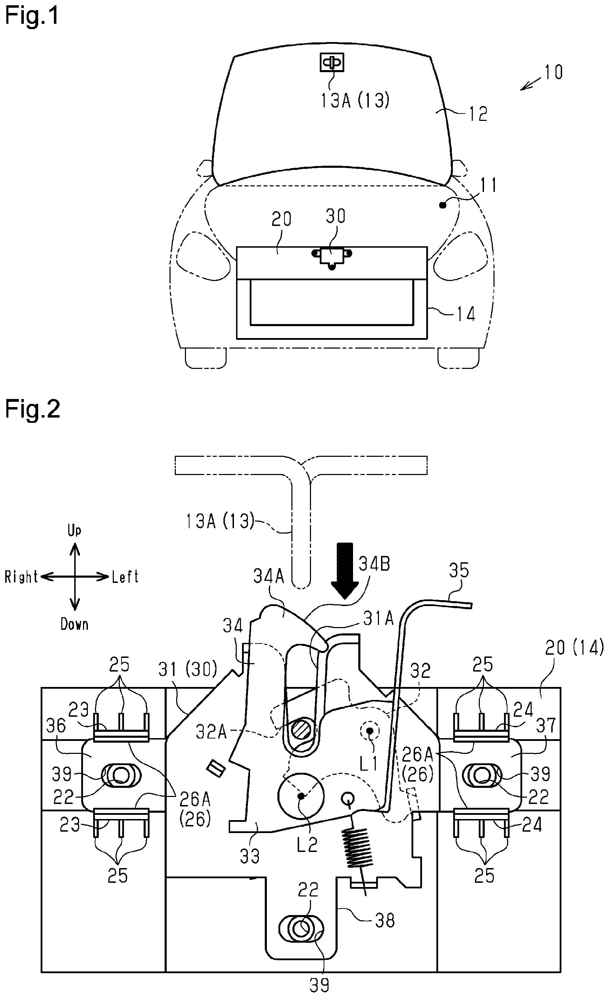

An attachment structure of a hood lock device in accordance with a first embodiment will now be described with reference to Figs. 1 to 5. That is, an attachment system including a hood lock device in accordance with the first embodiment will now be described with reference to Figs. 1 to 5. In the description hereinafter, a vehicle transverse direction, a vehicle vertical direction, a vehicle front-rear direction, a vehicle right side, a vehicle left side, a vehicle upper side, and the vehicle lower side refer to directions in a state in which the hood lock device is attached to a vehicle.

As shown in Fig. 1, a hood 12 is attached to a vehicle 10 to open and close an engine compartment 11. The hood 12 is pivotally supported by hinges (not shown) at an upper edge of the rear part of the engine compartment 11. A hood striker 13 is arranged on an inner surface of the hood 12. The hood striker 13 includes a U-shaped hook 13A that extends in the vehicle front-rear direction (hereafter, simply referred to as the front-rear direction) and projects downward in a state in which the hood 12 is closed.

A substantially rectangular frame-shaped radiator core support 14 is arranged at the front part of the vehicle 10. The upper part of the radiator core support 14 includes an upper core support 20 that is formed from a synthetic resin material. Parts of the radiator core support 14 other than the upper core support 20 are formed from a metal material.

As shown in Figs. 1 and 2, a hood lock device 30 is fastened to the front surface of the upper core support 20. When the hood 12 is closed, the hook 13A of the hood striker 13 enters the hood lock device 30, and the hood lock device 30 catches and locks the hook 13A. In this manner, the hood striker 13 is engaged with the hood lock device 30 to lock the hood 12 in the closed state.

The specific structure of the hood lock device 30 will now be described.

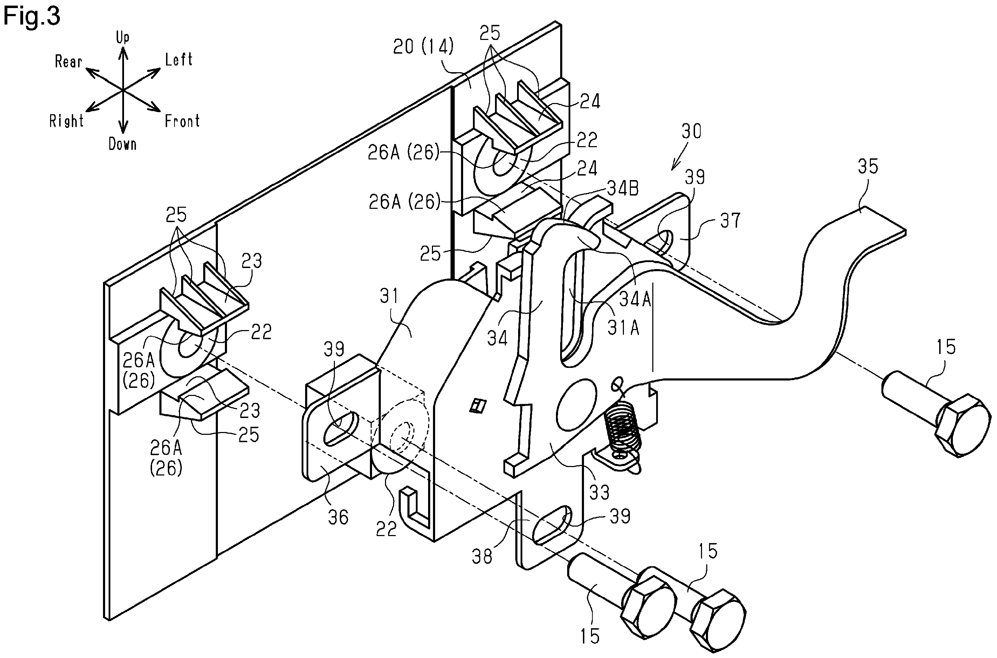

Fig. 2 is a front view of the hood lock device 30. As shown in Figs. 2 and 3, the hood lock device 30 includes a base 31 that is substantially pentagonal in a front view. The base 31 is formed by bending a metal plate and includes a cutout portion (cutout 31A). The cutout 31A extends in the vertical direction and has an opening in an upper end of the base 31. The cutout 31A is shaped so that the distance between opposing inner surfaces increases towards the vehicle upper side (hereafter, simply referred to as the upper side). As indicated by the black arrow in Fig. 2, when closing the hood 12, the hook 13A of the hood striker 13 enters the cutout 31A from the opening in the upper end.

As shown in Fig. 2, the hood lock device 30 includes a latch 32. The latch 32 is supported by the base 31 in a state rotatable about a line L1 extending in the front-rear direction and is constantly biased in a clockwise direction in a front view. The latch 32 includes a cutout portion (cutout 32A) so that its edge is open.

In a state in which the hood 12 is open (open state), the open end of the cutout 32A of the latch 32 is located in the cutout 31A of the base 31 in a front view. In the open state, as the hook 13A of the hood striker 13 enters the cutout 31A of the base 31 when closing the hood 12, the hood lock device 30 is in a state in which the hook 13A enters the cutout 32A of the latch 32. Then, when the hood 12 is closed, the hook 13A of the hood striker 13 moves into the cutout 32A of the latch 32 and rotates the latch 32 in a counterclockwise direction in a front view. As a result, in the front view, the open end of the cutout 32A of the latch 32 is located outside the cutout 31A of the base 31 (as shown in Fig. 2). Accordingly, in a front view, in a state in which the hood 12 is closed (closed state), the hook 13A of the hood striker 13 is fitted in a portion surrounded by the inner surface of the cutout 31A of the base 31 and the inner surface of the cutout 32A of the latch 32 (as shown in Fig. 2). In the closed state, rotation of the latch 32 is restricted. The hood 12 is locked in the closed state in this manner.

As shown in Figs. 2 and 3, the hood lock device 30 includes a catch 33. The catch 33 is supported by the base 31 in a state rotatable about a line L2 (Fig. 2) extending in the front-rear direction and is constantly biased in the clockwise direction in a front view.

The catch 33 includes an arm 34 located at the vehicle right side (hereafter, simply referred to as the right side) of the rotation center L2 and extending in the vertical direction. The arm 34 includes a hook 34A at an upper end. The hook 34A is claw-shaped and bent toward the vehicle left side (hereafter, simply referred to as the left side). The hook 34A includes an upper end surface 34B that is inclined downward toward the tip (right end in Fig. 2) of the hook 34A.

Further, the catch 33 includes a lever 35 extending in the vertical direction and located at the left side of the rotation center L2. The lever 35 is an operation member that is operated upward to open the hood 12. When the lever 35 is operated, the catch 33 is rotated in the counterclockwise direction in a front view.

When the lever 35 is not operated, the hook 34A of the arm 34 covers the upper opening of the cutout 31A of the base 31 (as shown in Fig. 2). When closing the hood 12, the upper end surface 34B of the hook 34A of the arm 34 abuts the hook 13A of the hood striker 13. In this case, the hook 13A of the hood striker 13 pushes the arm 34 (hook 34A) away rightward to rotate the arm 34 (hook 34A) in the counterclockwise direction in the front view. Then, the hook 13A of the hood striker 13 enters the cutout 31A of the base 31.

When opening the hood 12, the lever 35 of the catch 33 is operated upward. This rotates the catch 33 in the counterclockwise direction in the front view so that the hook 34A of the arm 34 is moved away from the cutout 31A of the base 31 in the front view. This allows the hook 13A of the hood striker 13 to be released from the cutout 31A of the base 31 without being blocked by the hook 34A of the catch 33. Thus, the hood 12 can be opened.

The structure for attaching the hood lock device 30 to the upper core support 20 will now be described.

The hood lock device 30 includes three fastening portions 36, 37, and 38 that are the portions fastened on the upper core support 20. Specifically, a right fastening portion 36 is arranged at the right side of the base 31 projecting rightward, a left fastening portion 37 is arranged at the left side of the base 31 projecting leftward, and a lower fastening portion is arranged at a lower part of the base 31 projecting downward. Each of the fastening portions 36, 37, and 38 has the form of a substantially flat plate extending in the vertical direction and the vehicle transverse direction and includes an elongated insertion hole 39 extending in the vehicle transverse direction. Further, the right fastening portion 36 and the left fastening portion 37 each have a width that is constant except at the distal end and extends straight in the vehicle transverse direction. In the first embodiment, the right fastening portion 36 and the left fastening portion 37 each correspond to an engagement portion held between two engagement pieces.

The upper core support 20 includes three blind nuts 22 each having female threads. The three blind nuts 22 respectively correspond to the insertion holes 39 of the fastening portions 36, 37, and 38 of the hood lock device 30. When fastening the hood lock device 30 to the upper core support 20, three bolts (Fig. 3) are respectively inserted through the insertion holes 39 of the fastening portions 36, 37, and 38 and fastened to the three blind nuts 22. This fastens and fixes the hood lock device 30 to the upper core support 20.

As shown in Figs. 2 to 4, two right engagement pieces 23 are arranged on the front surface of the upper core support 20 at a position corresponding to the right fastening portion 36 so as to sandwich the right fastening portion 36. Further, two left engagement pieces 24 are arranged on the front surface of the upper core support 20 at a position corresponding to the left fastening portion 37 so as to sandwich the left fastening portion 37. The two right engagement pieces 23 each have the form of a substantially flat plate extending in the front-rear direction and the vehicle transverse direction. The two right engagement pieces 23 extend parallel to each other and are spaced apart in the vertical direction. The two left engagement pieces 24 each have the form of a substantially flat plate extending in the front-rear direction and the vehicle transverse direction. The two right engagement pieces 23 extend in parallel to each other and are spaced apart in the vertical direction. In the two right engagement pieces 23, the lower engagement piece 23 is thicker than the upper engagement piece 23. In the two left engagement pieces 24, the lower engagement piece 24 is thicker than the upper engagement piece 24. The distance between the two right engagement pieces 23 in the vertical direction at a proximal end portion is substantially equal to the vertical length of the right fastening portion 36. Further, the distance between the two left engagement pieces 24 in the vertical direction at a proximal end portion is substantially equal to the vertical length of the left fastening portion 37. A plurality of ribs 25 is formed integrally with the surface of each of the two right engagement pieces 23 that is located at the outer side in the arrangement direction of the two right engagement pieces 23. A plurality of ribs 25 is formed integrally with the surface of each of the two left engagement pieces 24 that is located at the outer side in the arrangement direction of the two left engagement pieces 24. Each of the ribs 25 extends in the front-rear direction and the vertical direction.

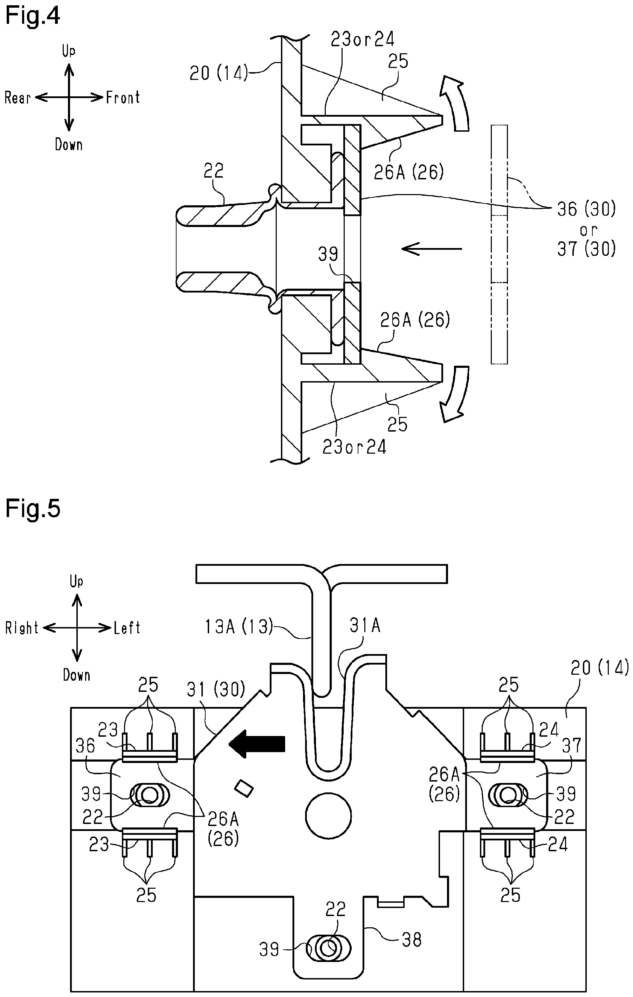

The two right engagement pieces 23 each include an opposing surface, and the opposing surfaces face toward each other. The two left engagement pieces 24 each include an opposing surface, and the opposing surfaces face toward each other. A stopper 26 is arranged on each of the opposing surface of the upper right engagement piece 23, the opposing surface of the lower right engagement piece 23, the opposing surface of the upper left engagement piece 24, and the opposing surface of the lower left engagement piece 24. The stopper 26 is a projection extending in the vehicle transverse direction. As shown in Fig. 4, the stopper 26 is arranged on a distal end region of each opposing surface of the engagement pieces 23 and 24, and a step is formed between the proximal end region of each opposing surface of the engagement pieces 23 and 24 and the corresponding stopper 26. Also, the stopper 26 includes a projected surface 26A that is inclined. Specifically, the stopper 26 has a projection amount that decreases from the proximal end toward the distal end of the stopper 26. Thus, the distance between the two opposing stoppers 26 increases from the proximal end toward the distal end of the stopper 26.

In the first embodiment, the right fastening portion 36, the right engagement pieces 23, the left fastening portion 37, and the left engagement pieces 24 correspond to a tentative attachment portion that tentatively attaches the hood lock device 30 to the upper core support 20 using fitting force.

A series of operations for attaching the hood lock device 30 to the upper core support 20 will now be described in detail together with the advantages.

When attaching the hood lock device 30 to the upper core support 20, first, the right fastening portion 36 of the hood lock device 30 is fitted to the right engagement pieces 23 on the front surface of the upper core support 20, and the left fastening portion 37 of the hood lock device 30 is fitted to the left engagement pieces 24 on the front surface of the upper core support 20. More specifically, as shown in Fig. 4, while the engagement pieces 23 and 24 are elastically deformed and forced open, the right fastening portion 36 is pushed into the space between the two right engagement pieces 23, and the left fastening portion 37 is pushed into the space between the two left engagement pieces 24. In this case, as indicated by the white arrows in Fig. 4, the upper engagement pieces 23 and 24 are elastically deformed and curved upward, and the lower engagement pieces 23 and 24 are elastically deformed and curved downward. Then, when the fastening portions 36 and 37 pass the stoppers 26 of the engagement pieces 23 and 24, the engagement pieces 23 and 24 recover from the elastic deformation, and the stoppers 26 of the engagement pieces 23 and 24 hook the edges of the front surfaces of the fastening portions 36 and 37. In this manner, the fastening portions 36 and 37 are held between the two engagement pieces 23 and 24. In other words, separation of the right fastening portion 36 from the two right engagement pieces 23 and separation of the left fastening portion 37 from the two left engagement pieces 24 are restricted.

In accordance with the first embodiment, the hood lock device 30 can be tentatively attached to the upper core support 20 by a simple operation of fitting the right fastening portion 36 between the two right engagement pieces 23 and fitting the left fastening portion 37 between the two left engagement pieces 24.

In the first embodiment, in the two right engagement pieces 23, the upper engagement piece 23 is thicker than the lower engagement piece 23. In the two left engagement pieces 24, the lower engagement piece 24 is thicker than the upper engagement piece 24. Thus, the upper engagement pieces 23 and 24 are thin and easy to deform. Accordingly, the right fastening portion 36 is readily fitted between the two right engagement pieces 23, and the left fastening portion 37 is readily fitted between the two left engagement pieces 24. Further, the lower engagement pieces 23 and 24 are thick and less easily deformed. This allows the fastening portions 36 and 37 to be appropriately supported by the lower the engagement pieces 23 and 24.

Also, in the first embodiment, the two right engagement pieces 23 and the right fastening portion 36 are arranged at a right portion of the hood lock device 30, and the two left engagement pieces 24 and the left fastening portion 37 are arranged at a left portion of the hood lock device 30. Accordingly, when the hood lock device 30 is tentatively attached to the upper core support 20, the two sides of the hood lock device 30 are supported by the upper core support 20. Therefore, the hood lock device 30 is stably supported by the upper core support 20.

In such a state in which the hood lock device 30 is tentatively attached to the upper core support 20, the upper core support 20 may be transported and delivered to an assembly factory where the vehicle 10 is assembled or transported to another work station in an assembly factory for a subsequent step. In accordance with the first embodiment, the hood lock device 30 is attached to the upper core support 20 through engagement of the fastening portions 36 and 37 of the hood lock device 30 with the corresponding engagement pieces 23 and 24 of the upper core support 20. This restricts separation of the hood lock device 30 from the upper core support 20 when transporting the upper core support 20 with the hood lock device 30 in a tentatively attached state.

Also, in the first embodiment, the vertical distance between the proximal end regions of the two right engagement pieces 23 is substantially equal to the vertical length of the right fastening portion 36, and the vertical distance between the proximal end regions of the two left engagement pieces 24 is substantially equal to the vertical length of the left fastening portion 37. Thus, when the hood lock device 30 is in a state tentatively attached to the upper core support 20, the hood lock device 30 is slidable and movable relative to the upper core support 20 in the vehicle transverse direction.

In the first embodiment, the engagement pieces 23 and 24 and the fastening portions 36 and 37 are shaped to restrict separation of the right fastening portion 36 from the two right engagement pieces 23, restrict separation of the left fastening portion 37 from the two left engagement pieces 24, and allow for movement of the fastening portions 36 and 37 relative to the engagement pieces 23 and 24.

Subsequently, an attachment position of the hood lock device 30, which is the position of the hood lock device 30 when attached to the upper core support 20, is adjusted. Specifically, the hood 12 is closed in a state in which the hood lock device 30 is tentatively attached to the upper core support 20, which is fixed to the vehicle 10.

In this case, the hook 13A of the hood striker 13 first abuts the upper end surface 34B of the hook 34A of the catch 33. The upper end surface 34B of the hook 34A is inclined and extends downward toward the tip. Accordingly, when the hook 13A of the hood striker 13 abuts the upper end surface 34B, the catch 33 is pushed by the hook 13A of the hood striker 13 and pivoted in the counterclockwise direction in the front view. In this manner, the hook 13A of the hood striker 13 pushes the hook 34A of the catch 33 away and enters the cutout 31A of the base 31.

Fig. 5 shows the positional relationship of the base 31 of the hood lock device 30 and the hook 13A of the hood striker 13 when the tentative attachment position of the hood lock device 30 is shifted leftward (rightward in Fig. 5). As shown in Fig. 5, in this case, the hook 13A of the hood striker 13 abuts the right side (left side in Fig. 5) of the inner surface of the cutout 31A of the base 31. As described above, the hood lock device 30 is movable relative to the upper core support 20 in the vehicle transverse direction even in a state tentatively attached to the upper core support 20. Thus, when the hook 13A of the hood striker 13 abuts the inner surface of the cutout 31A (specifically, surface at right side) and pushes the inner surface of the cutout 31A, the hood lock device 30 moves rightward relative to the upper core support 20 as indicated by the black arrow in Fig. 5. When the tentative attachment position of the hood lock device 30 is shifted rightward, the hook 13A of the hood striker 13 abuts the left side of the inner surface of the cutout 31A and pushes the inner surface so that the hood lock device 30 moves leftward relative to the upper core support 20. When the tentative attachment position of the hood lock device 30 is located within an allowable range, the hood lock device 30 does not move relative to the upper core support 20 when closing the hood 12.

In this manner, when the hood 12 is closed in a state in which the hood lock device 30 is tentatively attached to the upper core support 20, the hood lock device 30 will be shifted to a position in the vehicle transverse direction that does not hinder smooth entry of the hook 13A of the hood striker 13 into the cutout 31A of the base 31.

Then, the hood lock device 30 is fastened to the upper core support 20. Specifically, three fastening bolts 15 (Fig. 3) are respectively inserted through the insertion holes 39 of the fastening portions 36, 37, and 38 of the hood lock device 30 and fastened to the blind nuts 22 of the upper core support 20. This fastens and fixes the hood lock device 30 to the upper core support 20. In the first embodiment, the hood lock device 30 can be fastened and fixed by the bolts 15 in a state in which the hood 12 is locked in the closed state.

In accordance with the first embodiment, the hood lock device 30 can be tentatively attached to the upper core support 20 through an operation such as fitting the right fastening portion 36 between the two right engagement pieces 23 of the upper core support 20 and fitting the left fastening portion 37 between the two left engagement pieces 24 of the upper core support 20. This allows the hood lock device 30 to be supported by the upper core support 20 before the hood lock device 30 is fastened to the upper core support 20. Further, in the tentatively attached state, the position of the hood lock device 30 can be adjusted in the vehicle transverse direction by moving the hood lock device 30 relative to the upper core support 20. In this manner, in accordance with the first embodiment, tentative attachment of the hood lock device 30 is easily performed and the position of the hood lock device 30 is easily adjusted. This facilitates the attachment operation of the hood lock device 30.

In the first embodiment, the upper core support 20 of the radiator core support 14 is formed from a synthetic resin material. Typically, the upper core support 20 that is formed from a synthetic resin tends to include a greater manufacturing error compared to an upper core support that is formed from a metal. Thus, the attachment structure of the first embodiment that fastens the hood lock device 30 to the upper core support 20, which is formed from a synthetic resin, may shift the relative positions of the hood lock device 30 and the hood striker 13. With the attachment structure that fastens the hood lock device 30 to the upper core support 20, which is formed from a synthetic resin, the first embodiment facilitates the attachment operation of the hood lock device 30 while allowing for adjustment of the position of the hood lock device 30 in the vehicle transverse direction.

As described above, the first embodiment has the following advantages.
(1) The tentative attachment of hood lock device 30 to the upper core support 20 is easily performed, and the position of the hood lock device 30 is easily adjusted. This facilitates the attachment operation of the hood lock device 30.
(2) When the hood lock device 30 is tentatively attached to the upper core support 20, the two sides of the hood lock device 30 are supported by the upper core support 20. Thus, the hood lock device 30 is stably supported by the upper core support 20.
(3) The hood lock device 30 can be tentatively attached to the upper core support 20 through a simple operation of fitting the right fastening portion 36 between the two right engagement pieces 23 and fitting the left fastening portion 37 between the two left engagement pieces 24 in a state in which the upper core support 20 and the hood lock device 30 are movable relative to each other in the vehicle transverse direction.
(4) In the attachment structure, in which the hood lock device 30 is fastened to the upper core support 20 formed from a synthetic resin, the attachment operation of the hood lock device 30 is readily performed while the position of the hood lock device 30 is adjusted in the vehicle transverse direction.

### Second Embodiment

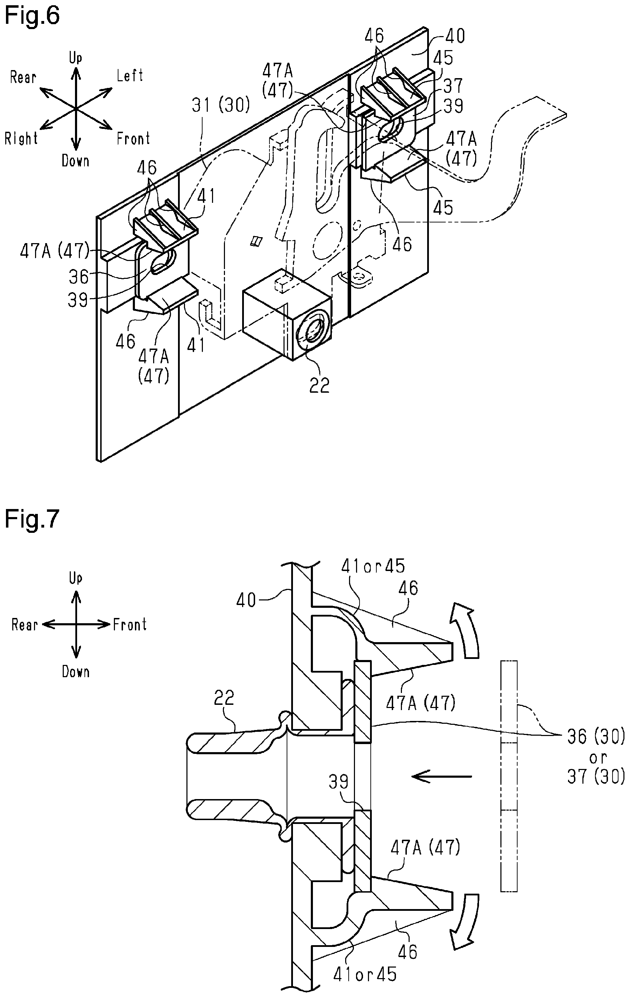

With reference to Figs. 6 and 7, an attachment structure of a hood lock device in accordance with a second embodiment will now be described focusing on differences from the first embodiment. Same reference numerals are given to those components that are the same as the corresponding components of the first embodiment. Such components will not be described in detail.

In the second embodiment, the engagement pieces of the upper core support only differ in shape from the first embodiment.

The shape of the engagement pieces in accordance with the second embodiment will now be described.

As shown in Figs. 6 and 7, two right engagement pieces 41 are arranged on the front surface of an upper core support 40 at a position corresponding to the right fastening portion 36 to sandwich the right fastening portion 36. Further, two left engagement pieces 45 are arranged on the front surface of the upper core support 40 at a position corresponding to the left fastening portion 37 to sandwich the left fastening portion 37.

The two right engagement pieces 41 each have the form of a plate extending in the front-rear direction and the vehicle transverse direction. The two right engagement pieces 41 extend parallel to each other and are spaced apart in the vertical direction. The two left engagement pieces 45 each have the form of a plate extending in the front-rear direction and the vehicle transverse direction. The two left engagement pieces 45 extend parallel to each other and are spaced apart in the vertical direction. Further, each of the two right engagement pieces 41 and the two left engagement pieces 45 has an S-shaped cross section as viewed in the vehicle transverse direction. Specifically, the distance between the two right engagement pieces 41 at a proximal end region (left region in Fig. 7) is greater than that at a distal end region (right region in Fig. 7). In the same manner, the distance between the two left engagement pieces 45 at a proximal end region is greater than that at a distal end region.

The distance between the two right engagement pieces 41 at the distal end portion is substantially equal to the vertical length of the right fastening portion 36, and the distance between the two left engagement pieces 45 at the distal end portion is substantially equal to the vertical length of the left fastening portion 37. In the two right engagement pieces 41, the lower engagement piece 41 is thicker than the upper engagement piece 41. In the two left engagement pieces 45, the lower engagement piece 45 is thicker than the upper engagement piece 45. Further, a plurality of ribs 46 is formed integrally with the surface of each of the two right engagement pieces 41 that is located at the outer side in the arrangement direction of the two right engagement pieces 41. A plurality of ribs 46 is formed integrally with the surface of each of the two left engagement pieces 45 that is located at an outer side in the arrangement direction of the two left engagement pieces 45. Each of the ribs 46 extends in the front-rear direction and the vertical direction.

Also, a projection (stopper 47) extending in the vehicle transverse direction is arranged on an opposing surface of each right engagement piece 41 and an opposing surface of each left engagement piece 45. As shown in Fig. 7, the stopper 47 is arranged on the distal-end region of the opposing surface of each engagement piece 41 and 45, and a step is formed between the proximal end region of the opposing surface of each engagement pieces 41 and 45 and the corresponding stopper 47. In addition, each stopper 47 includes a projected surface 47A that is inclined so that a projection amount of the stopper 47 decreases toward the distal end.

In the second embodiment, the right fastening portion 36, the right engagement pieces 41, the left fastening portion 37, and the left engagement pieces 45 correspond to a tentative attachment portion that tentatively attaches the hood lock device 30 to the upper core support 40 using fitting force.

The second embodiment above has the following advantage (5) in addition to the above-described advantages (1) to (4).

(5) In the second embodiment, each of the two right engagement pieces 41 and the two left engagement pieces 45 has an S-shaped cross section as viewed in the vehicle transverse direction. In this manner, compared to when the engagement pieces have the form of a flat plate, the engagement pieces 41 and 45 have a longer flex portion. Thus, the engagement pieces 41 and 45 are more flexible. Therefore, when tentatively attaching the hood lock device 30 to the upper core support 40, the right fastening portion 36 is smoothly fitted between the two right engagement pieces 41 and the left fastening portion 37 is smoothly fitted between the two left engagement pieces 45 while the two engagement pieces 41 and 45 are forced open.

### Third Embodiment

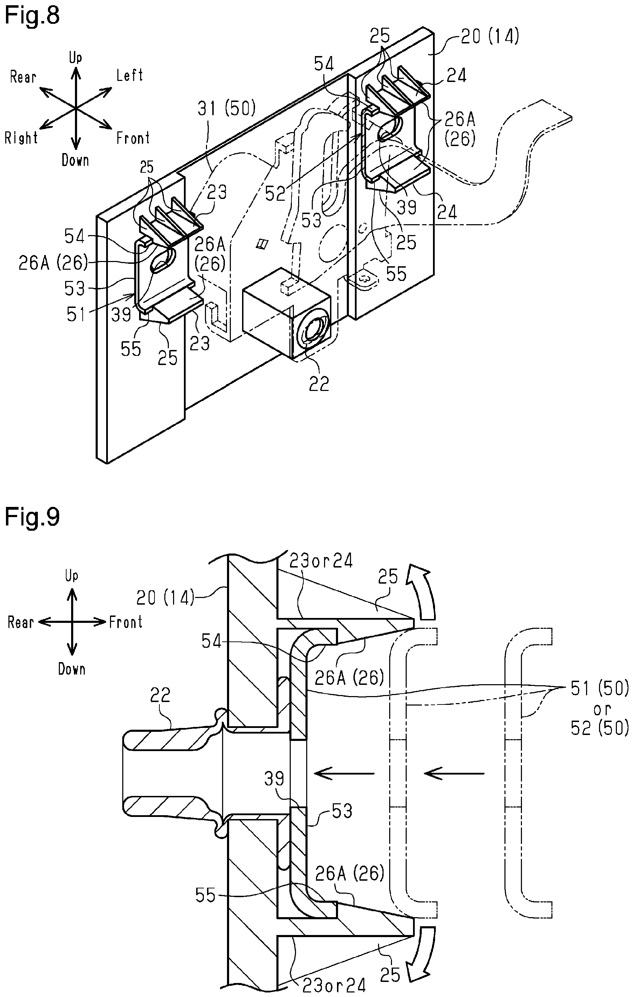

With reference to Figs. 8 and 9, an attachment structure of a hood lock device in accordance with a third embodiment will now be described focusing on differences from the first embodiment. Same reference numerals are given to those components that are the same as the corresponding components of the first embodiment. Such components will not be described in detail.

In the third embodiment, the right fastening portion and the left fastening portion of the hood lock device differ in shape from the first embodiment.

The shape of the right fastening portion and the left fastening portion in accordance with the third embodiment will now be described.

As shown in Figs. 8 and 9, a right fastening portion 51 is located at the right side of the base 31 of a hood lock device 50 projecting rightward, and a left fastening portion 52 is located at the left side of the base 31 projecting leftward. The right fastening portion 51 and the left fastening portion 52 each have the form of a plate extending in the vehicle transverse direction. More specifically, the right fastening portion 51 and the left fastening portion 52 each include a base wall 53, an upper wall 54, and a lower wall 55 that are integrally formed as a single component. The base wall 53 has the form of a flat plate and extends in the vertical direction. The upper wall 54 extends forward from an upper end of the base wall 53. The lower wall 55 extends forward from a lower end of the base wall 53. The right fastening portion 51 and the left fastening portion 52 are each curved at a boundary portion between the base wall 53 and the corresponding upper wall 54 and a boundary portion between the base wall 53 and the corresponding lower wall 55. Specifically, each fastening portion 51 and 52 includes an end surface that is close to the upper core support 20 (end surface at left side in Fig. 9). The end surface of each fastening portion 51 and 52 includes an upper part and a lower part that are surfaces curved away from the upper core support 20. When tentatively attaching the hood lock device 50 to the upper core support 20, the end surface of each fastening portion 51 and 52 opposes the upper core support 20.

In the third embodiment, the right fastening portion 51, the right engagement pieces 23, the left fastening portion 52, and the left engagement pieces 24 correspond to a tentative attachment portion that tentatively attaches the hood lock device 50 to the upper core support 20 using fitting force.

The third embodiment above has the following advantage (6) in addition to the above-described advantages (1) to (4).

(6) When tentatively attaching the hood lock device 50, while the engagement pieces 23 and 24 are elastically deformed so that the engagement pieces 23 and 24 are forced open, the right fastening portion 51 is pushed into the space between the two right engagement pieces 23 and the left fastening portion 52 is pushed into the space between the two left engagement pieces 24. In this case, as indicated by the white arrows in Fig. 9, the upper engagement pieces 23 and 24 are elastically deformed and bent upward and the lower engagement pieces 23 and 24 are elastically deformed and bent downward. In the third embodiment, the end surface of each fastening portion 51 and 52 that is close to the upper core support 20 is a surface curved so that the upper end part and the lower end part of the end surface extend away from the upper core support 20. In this case, the inner surfaces of the two engagement pieces 23 and 24 (specifically, projected surfaces 26A of stoppers 26) abut the curved surfaces at the upper end and the lower end of the fastening portions 51 and 52. This limits the occurrence of a situation in which the upper end and the lower end of the fastening portions 51 and 52 are obstructed by the inner surfaces of the engagement pieces 23 and 24. Thus, the right fastening portion 51 is smoothly fitted between the two right engagement pieces 23, and the left fastening portion 52 is smoothly fitted between the two left engagement pieces 24.

### Fourth Embodiment

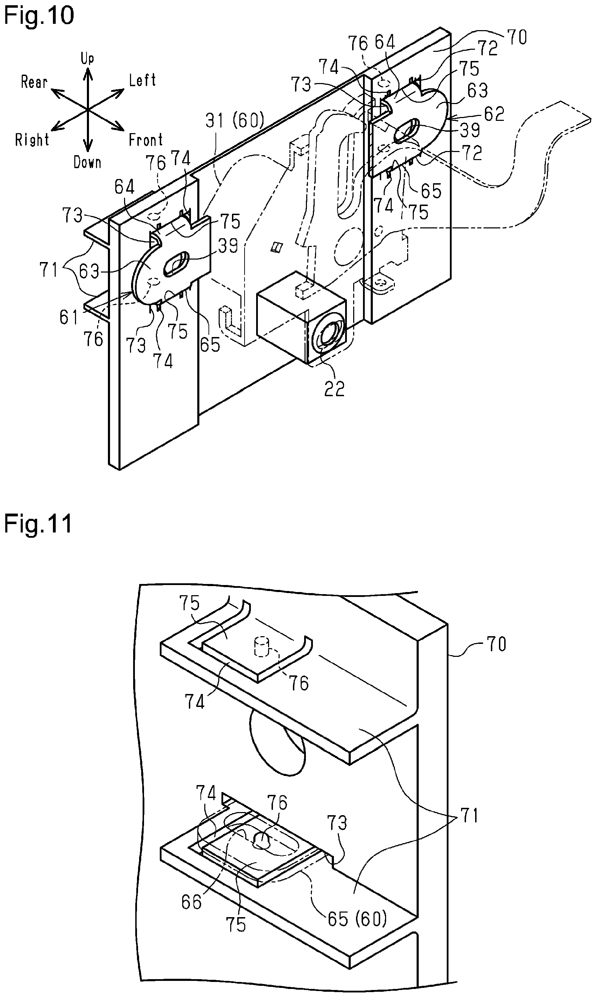

With reference to Figs. 10 to 13, an attachment structure of a hood lock device in accordance with a fourth embodiment will now be described with focusing on differences from the first embodiment. Same reference numerals are given to those components that are the same as the corresponding components of the first embodiment. Such components will not be described in detail.

In the fourth embodiment, the right fastening portion and the left fastening portion of the hood lock device and the engagement pieces of the upper core support differ in shape from the first embodiment.

The shapes of the fastening portions and the engagement pieces in accordance with the fourth embodiment will now be described.

First, the right fastening portion and the left fastening portion in accordance with the fourth embodiment will be described.

As shown in Figs. 10 to 13, a right fastening portion 61 is located at the right side of the base 31 of a hood lock device 60 projecting rightward, and a left fastening portion 62 is located at the left side of the base 31 projecting leftward. The right fastening portion 61 and the left fastening portion 62 each have the form of a plate extending in the vehicle transverse direction. More specifically, the right fastening portion 61 and the left fastening portion 62 each include a base wall 63, an upper arm 64, and a lower arm 65. The base wall 63 has the form of a flat plate extending in the vertical direction. The upper arm 64 extends rearward from an upper end of the base wall 63. The lower arm 65 extends rearward from a lower end of the base wall 63. The upper arm 64 and the lower arm 65 each have the form of a plate extending in the vehicle transverse direction and the front-rear direction. The upper arm 64 and the lower arm 65 are extend parallel to each other. The upper arm 64 and the lower arm 65 each include an elongated through hole (engagement hole 66) that extends in the vehicle transverse direction.

A right engagement piece 71 and a left engagement piece 72 of an upper core support 70 in accordance with the fourth embodiment and its peripheral structure will now be described.

The upper core support 70 includes through holes (slits 73) extending in the vehicle transverse direction at positions corresponding to arms 64 and 65 of the right fastening portion 61. Also, the upper core support 70 includes through holes (slits 73) extending in the vehicle transverse direction at positions corresponding to arms 64 and 65 of the left fastening portion 62. Each slit 73 is slightly greater in width than the corresponding one of the arms 64 and 65, and each slit 73 is slightly greater in length than the corresponding one of the arms 64 and 65 in the vehicle transverse direction. When attaching the hood lock device 60 to the upper core support 70, the arms 64 and 65 are inserted into the corresponding slits 73.

Two right engagement pieces 71 are arranged on a rear surface of the upper core support 70 at a position corresponding to the right fastening portion 61. The two right engagement pieces 71 sandwich an upper surface of the upper arm 64 and a lower surface of the lower arm 65 of the right fastening portion 61. Also, two left engagement pieces 72 are arranged on the rear surface of the upper core support 70 at a position corresponding to the left fastening portion 62. The two left engagement pieces 72 sandwich an upper surface of the upper arm 64 and a lower surface of the lower arm 65 of the left fastening portion 62.

The two right engagement pieces 71 each have the form of a substantially flat plate extending in the front-rear direction and the vehicle transverse direction. The two right engagement pieces 71 extend parallel to each other. The two left engagement pieces 72 each have the forms of a substantially flat plate extending in the front-rear direction and the vehicle transverse direction. The two left engagement pieces 72 extend parallel to each other. The distance between opposing surfaces of the two right engagement pieces 71 is substantially equal to the distance between the upper surface of the upper arm 64 and the lower surface of the lower arm 65 of the right fastening portion 61. Also, the distance between opposing surfaces of the two left engagement pieces 72 is substantially equal to the distance between the upper surface of the upper arm 64 and the lower surface of the lower arm 65 of the left fastening portion 62. Each right engagement piece 71 includes a spring portion 75, and the spring portion 75 is surrounded by a U-shaped through hole 74 (Fig. 11) extending in three directions (rear side, right side, and left side). Each left engagement piece 72 includes a spring portion 75 that is surrounded by a through hole 74 extending in a U-shape in three directions (rear side, right side, and left side). The spring portion 75 is elastically deformable when bent in the vertical direction relative to the peripheral portion extending around the spring portion 75. Each spring portion 75 includes a substantially semispherical engagement projection 76 (refer to Fig. 11) at a position corresponding to the engagement hole 66.

In the fourth embodiment, the right fastening portion 61, the right engagement pieces 71, the left fastening portion 62, and the left engagement pieces 72 correspond to a tentative attachment portion that tentatively attaches the hood lock device 60 to the upper core support 70 using fitting force.

The operation for tentatively attaching the hood lock device 60 to the upper core support 70 will now be described in detail along with the advantages.

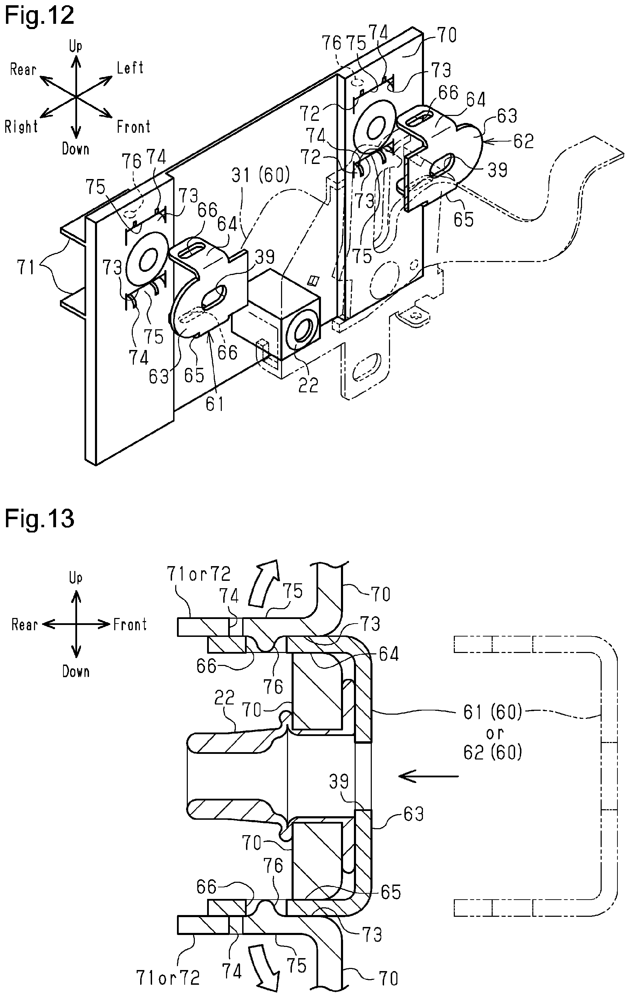

As shown in Fig. 13, when tentatively attaching the hood lock device 60 to the upper core support 70, the upper arm 64 and the lower arm 65 of the right fastening portion 61 are inserted into the slits 73 of the upper core support 70, and the upper arm 64 and the lower arm 65 of the left fastening portion 62 are inserted into the slits 73 of the upper core support 70. As indicated by the white arrows in Fig. 13, while the engagement pieces 71 and 72 (specifically, spring portions 75) are elastically deformed so that the engagement pieces 71 and 72 are forced open, the right fastening portion 61 is pushed into the space between the two right engagement pieces 71 and the left fastening portion 62 is pushed into the space between the two left engagement pieces 72. In this case, the spring portions 75 of the upper engagement pieces 71 and 72 are elastically deformed and bent upward, and the spring portions 75 of the lower engagement pieces 71 and 72 are elastically deformed and bent downward. Then, when the engagement hole 66 of each arm 64 and 65 is located in correspondence with the corresponding engagement projection 76 of the spring portion 75, the spring portion 75 recovers from the elastic deformation. In this manner, the engagement projection 76 of each spring portion 75 is fitted in the engagement hole 66 of corresponding one of the arm 64 and 65 (as shown in Fig. 13).

In this manner, the fastening portions 61 and 62 (specifically, arms 64 and 65) are sandwiched by the engagement pieces 71 and 72, and the engagement projections 76 of the spring portions 75 are fitted in the corresponding the engagement holes 66 of the arms 64 and 65. Therefore, separation of the right fastening portion 61 from the two right engagement pieces 71 is restricted, and separation of the left fastening portion 62 from the two left engagement pieces 72 is restricted.

In accordance with the fourth embodiment, the hood lock device 60 can be tentatively attached to the upper core support 70 through a simple operation of fitting the right fastening portion 61 between the two right engagement pieces 71 and fitting the left fastening portion 62 between the two left engagement pieces 72.

As shown in Figs. 10 and 12, in the fourth embodiment, the length of each slit 73 is greater than that of corresponding one of the arms 64 and 65 in the vehicle transverse direction. This allows for relative movement of the arms 64 and 65 in the vehicle transverse direction within the corresponding slits 73. Further, the engagement hole 66 of each arm 34 is elongated in the vehicle transverse direction. This allows for movement of the engagement projection 76 of the spring portion 75 in the vehicle transverse direction relative to the engagement hole 66 of the corresponding one of the arms 64 and 65. Thus, in this case, even though the hood lock device 60 is tentatively attached to the upper core support 70, the hood lock device 60 is slidable and movable relative to the upper core support 70 in the vehicle transverse direction.

In the fourth embodiment, the engagement pieces 71 and 72, the slits 73, and the fastening portions 61 and 62 are shaped to restrict separation of the right fastening portion 61 from the two right engagement pieces 71, restrict separation of the left fastening portion 72 from the two left engagement pieces 72, and allow movement of the fastening portions 61 and 62 relative to the engagement pieces 71 and 72.

Also, in the fourth embodiment, the fastening portions 61 and 62 each include the upper arm 64 extending in the front-rear direction at the upper part, the lower arm 65 extending in the front-rear direction at the lower part, and the base wall 63 extending in the vertical direction and connecting the upper arm 64 and the lower arm 65. Further, the two right engagement pieces 71 each have the form of a substantially flat plate extending in the front-rear direction and the vehicle transverse direction. The two right engagement pieces 71 extend parallel to each other and sandwich the upper surface of the upper arm 64 and the lower surface of the lower arm 65 of the right fastening portion 61. The two left engagement pieces 72 each have the form of a substantially flat plate extending in the front-rear direction and the vehicle transverse direction. The two left engagement pieces 72 extend parallel to each other and sandwich the upper surface of the upper arm 64 and the lower surface of the lower arm 65 of the left fastening portion 62. In this manner, as shown in Fig. 13, the outer surfaces of the fastening portions 61 and 62 (specifically, upper surfaces of upper arms 64 and lower surfaces of lower arms 65) come into planar contact with the inner surfaces of the engagement pieces 71 and 72. This allows the fastening portions 61 and 62 to be stably supported by the engagement pieces 71 and 72.

The fourth embodiment above has the following advantage (7) in addition to the above-described advantages (1) to (4).

(7) The outer surfaces of the fastening portions 61 and 62 are configured to be in planar contact with the inner surfaces of the engagement pieces 71 and 72 so that the fastening portions 61 and 62 are stably supported by the engagement pieces 71 and 72.

### Fifth Embodiment

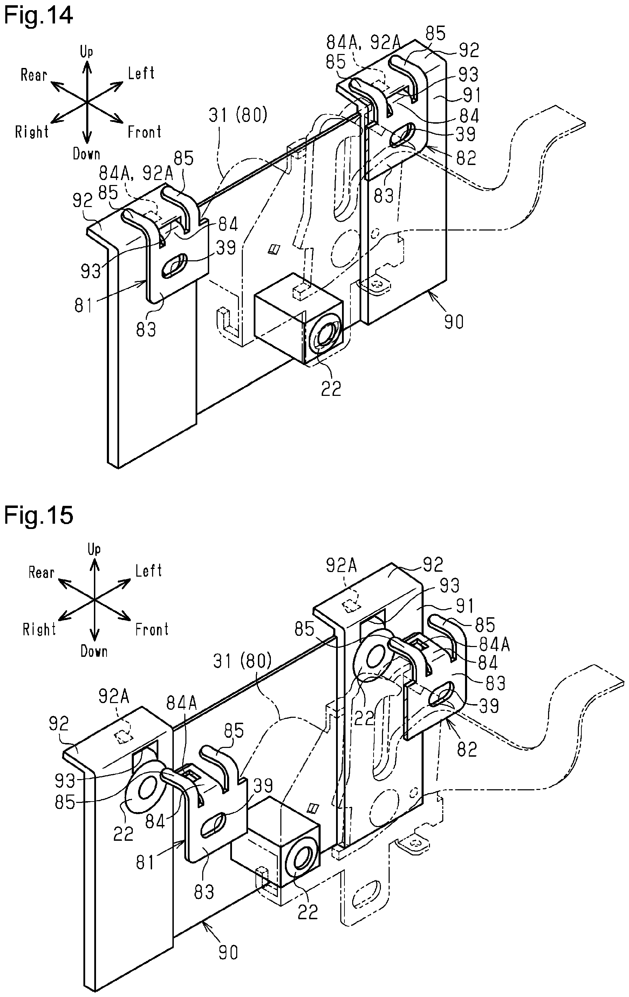

With reference to Figs. 14 to 16, an attachment structure of a hood lock device in accordance with a fifth embodiment will now be described with focusing on differences from the first embodiment. Same reference numerals are given to those components that are the same as the corresponding components of the first embodiment. Such components will not be described in detail.

In the fifth embodiment, the right fastening portion and the left fastening portion of the hood lock device and the upper core support differ in shape from the first embodiment.

The shapes of the right fastening portion, the left fastening portion, and the upper core support in accordance with the fifth embodiment will now be described.

First, the shape of the right fastening portion and the left fastening portion in accordance with the fifth embodiment will be described.

As shown in Figs. 14 to 16, a right fastening portion 81 is located at the right side of the base 31 of a hood lock device 80 projecting rightward, and a left fastening portion 82 is located at the left side of the base 31 projecting leftward.

The right fastening portion 81 and the left fastening portion 82 each include a base wall 83, a lower arm 84, and two upper arms 85. The base wall 83 has the form of a flat plate extending in the vehicle transverse direction and the vertical direction. The lower arm 84 and the two upper arms 85 are arranged on an upper end of the base wall 83. The lower arm 84 has the form of a plate extending in the vehicle transverse direction and the front-rear direction. The lower arm 84 projects rearward from the upper end of the base wall 83. The lower arm 84 has a tip that is bent downward. Further, the lower arm 84 includes a rectangular through hole (engagement hole 84A). The upper arms 85 are arranged at the upper end of the base wall 83 so that the lower arm 84 is located between the upper arms 85. The upper arms 85 are each L-shaped. More specifically, the upper arms 85 each include a proximal end portion that has the form of a plate extending in the vehicle transverse direction and the vertical direction and a distal end portion that has the form of a plate extending in the vehicle transverse direction and the front-rear direction. The distal end portions of the upper arms 85 project rearward from the upper end of the corresponding proximal end portions. The distal end portions of the upper arms 85 extend at an upper part of the lower arm 84. The upper arms 85 each have a tip that is bent upward.

The shape of an upper core support 90 in accordance with the fifth embodiment will now be described.

The upper core support 90 includes an upright wall portion 91 and an upper wall portion 92. The upright wall portion 91 has the form of a plate extending in the vertical direction and the vehicle transverse direction. The upper wall portion 92 has the form of a plate extending in the front-rear direction and the vehicle transverse direction and projects rearward from an upper end of the upright wall portion 91. The lower surface of the upper wall portion 92 includes a rectangular engagement projection 92A at a position corresponding to the engagement hole 84A of the lower arm 84. The engagement projection 92A has a length in the vehicle transverse direction that is less than that of the engagement hole 84A of the lower arm 84.

The upright wall portion 91 of the upper core support 90 includes a through hole (slit 93) that extends in the vehicle transverse direction at a position corresponding to the lower arm 84 of the right fastening portion 81. Also, the upright wall portion 91 of the upper core support 90 includes a through hole (slit 93) that extends in the vehicle transverse direction at a position corresponding to the lower arm 84 of the left fastening portion 82. The slits 93 extend in the surface of the upright wall portion 91. The slit 93 has a width that is greater than the thickness of the lower arm 84, and the slit 93 has a length that is greater than that of the lower arm 84 in the vehicle transverse direction. When attaching the hood lock device 80 to the upper core support 90, the lower arms 84 of the fastening portions 81 and 82 are inserted into the slits 93. In the fifth embodiment, the upper arms 85 and the lower arm 84 correspond to two engagement pieces, the upper wall portion 92 corresponds to an engagement portion, the right fastening portion 81, the left fastening portion 82, and the upper wall portion 92 correspond to a tentative attachment portion that tentatively attaches the hood lock device 80 to the upper core support 90 using fitting force.

The operation for tentatively attaching the hood lock device 80 to the upper core support 90 will now be described along with the advantages.

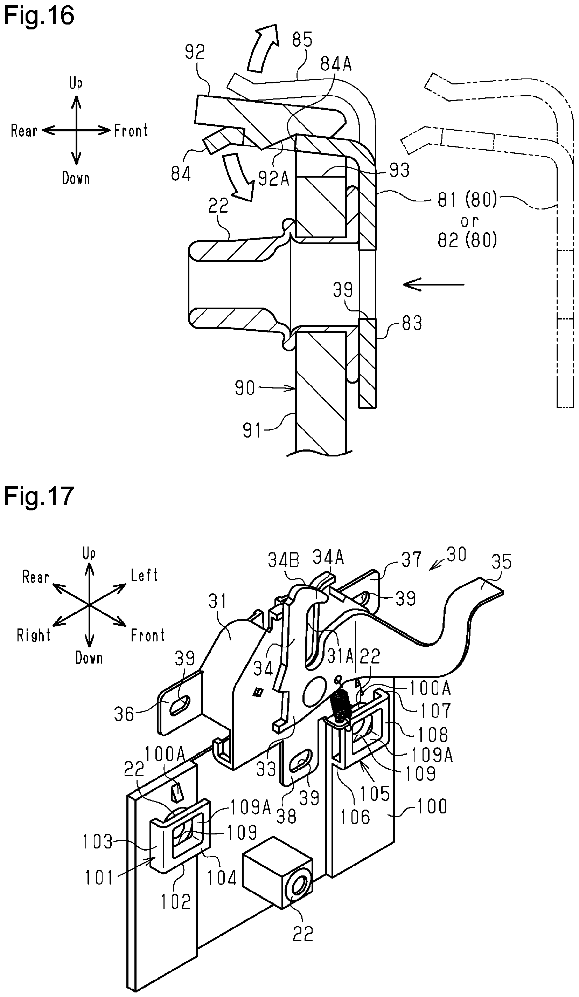

As shown in Fig. 16, when tentatively attaching the hood lock device 80 to the upper core support 90, the lower arms 84 of the fastening portions 81 and 82 are inserted into the slits 93 by moving the upper arms 85 of the fastening portions 81 and 82 along the upper surfaces of the upper wall portions 92. As indicated by the white arrows in Fig. 16, the upper arms 85 and the lower arm 84 are elastically deformed and forced open to push the upper wall portion 92 into the space between the two upper arms 85 and the lower arm 84. In this case, the upper arms 85 are elastically deformed and bent upward and the lower arm 84 is elastically deformed and bent downward. Then, when the engagement hole 84A of the lower arm 84 is located at a position corresponding to the engagement projection 76 on the lower surface of the upper wall portion 92, the engagement projection 92A of the upper wall portion 92 is fitted in the engagement hole 66 of the lower arm 84 (as shown in Fig. 16). In this manner, the upper wall portion 92 is held between the two upper arms 85 and the lower arm 84, and the engagement projection 76 of the upper wall portion 92 is fitted in the engagement hole 84A of the lower arm 84. In this state, separation of the fastening portions 81 and 82 from the upper core support 90 (specifically, upper wall portion 92) is restricted.

In accordance with the fifth embodiment, the hood lock device 80 can be tentatively attached to the upper core support 90 through a simple operation of fitting the arms 84 and 85 to the upper core support 90 (specifically, slit 93 and upper wall portion 92).

In the fifth embodiment, the slit 93 has a length that is greater than that of the lower arm 84 in the vehicle transverse direction thereby allowing for relative movement of the lower arm 84 in the vehicle transverse direction within the slit 93. Further, the engagement hole 84A of the lower arm 84 has a length in the vehicle transverse direction that is greater than that of the engagement projection 92A of the upper wall portion 92 thereby allowing for relative movement of the engagement projection 92A of the upper wall portion 92 in the vehicle transverse direction within the engagement hole 84A of the lower arm 84. Thus, in this case, even though the hood lock device 80 is tentatively attached to the upper core support 90, the hood lock device 80 is slidable and movable relative to the upper core support 90 in the vehicle transverse direction.

In the fifth embodiment, the arms 84 and 85, the slit 93, and the upper wall portion 92 are shaped to restrict separation of the fastening portions 81 and 82 from the upper core support 90 and allow movement of the fastening portions 81 and 82 relative to the upper core support 90.

Further, in the fifth embodiment, each of the distal end portion of the lower arm 84, the distal end portion of the upper arm 85, and the upper wall portion 92 has the shape of a plate extending in the vehicle transverse direction and the front-rear direction. Also, when the hood lock device 80 is tentatively attached to the upper core support 90, the upper wall portion 92 is fitted between the lower arm 84 and the upper arms 85. In this manner, the inner surfaces of the arms 84 and 85 of the fastening portions 81 and 82 (specifically, lower surface of upper arm 85 and upper surface of lower arm 84) are in planar contact with the outer surfaces of the upper wall portion 92. In the fifth embodiment, the upper surface of the lower arm 84 is in planar contact with the lower surface of the upper wall portion 92. This allows the fastening portions 81 and 82 to be stably supported by the upper core support 90.

The fifth embodiment above has the following advantage (8) in addition to the above-described advantages (1) to (4).

(8) The upper surface of the lower arm 84 of the fastening portions 81 and 82 is configured to be in planar contact with the lower surface of the upper wall portion 92 of the upper core support 90 so that the fastening portions 81 and 82 are stably supported by the upper core support 90.

### Sixth Embodiment

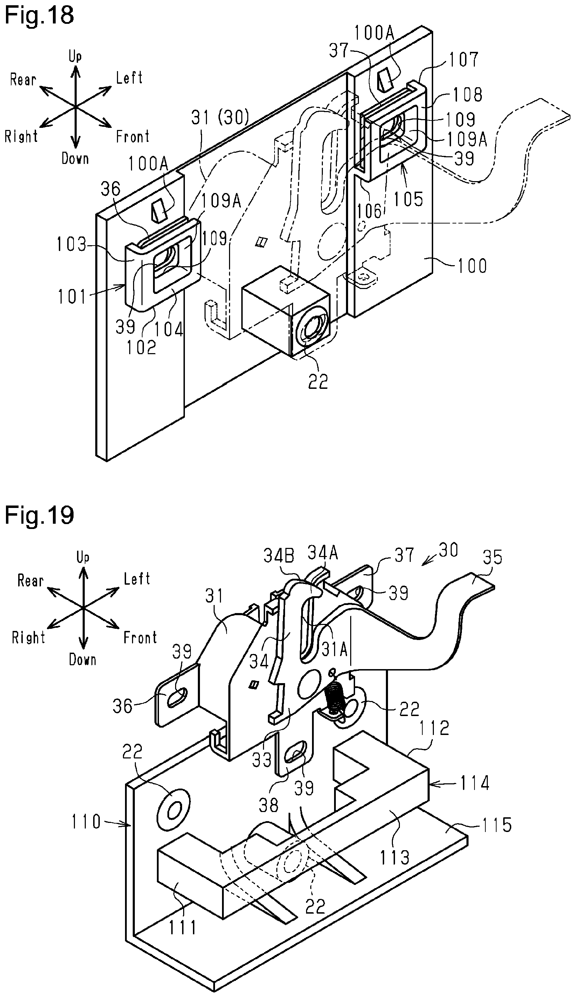

With reference to Figs. 17 and 18, an attachment structure of a hood lock device in accordance with a sixth embodiment will now be described focusing on differences from the first embodiment. Same reference numerals are given to those components that are the same as the corresponding components of the first embodiment. Such components will not be described in detail.

In the sixth embodiment, only the upper core support differs in shape from the first embodiment.

The shape of the upper core support in accordance with the sixth embodiment will now be described.

As shown in Figs. 17 and 18, an upper core support 100 includes a right pocket 101 on the front surface at a position corresponding to the right fastening portion 36 to accommodate the right fastening portion 36. The right pocket 101 includes a bottom wall 102 arranged at the lower side, a right wall 103 arranged at the right side, and a front wall 104 arranged at the front side. The bottom wall 102 has the form of a plate extending in the vehicle transverse direction and the front-rear direction. The right wall 103 has the form of a plate extending in the vertical direction and the front-rear direction. The front wall 104 has the form of a plate extending in the vehicle transverse direction and the vertical direction.

Further, the upper core support 100 includes a left pocket 105 on the front surface at a position corresponding to the left fastening portion 37 to accommodate the left fastening portion 37. The left pocket 105 includes a bottom wall 106 arranged at the lower side, a left wall 107 arranged at the left side, and a front wall 108 arranged at the front side. The bottom wall 106 has the form of a plate extending in the vehicle transverse direction and the front-rear direction. The left wall 107 has the form of a plate extending in the vertical direction and the front-rear direction. The front wall 108 has the form of a plate extending in the vehicle transverse direction and the vertical direction.

The distance between the right wall 103 of the right pocket 101 and the left wall 107 of the left pocket 105 is greater than the distance between the right end of the right fastening portion 36 and the left end of the left fastening portion 37. The front wall 104 of the right pocket 101 and the front wall 108 of the right pocket 101 each include a substantially rectangular through hole (insertion hole 109). The insertion holes 109 are located in front of the corresponding blind nuts 22 of the upper core support 100. Further, the walls of the insertion hole 109 of the front walls 104 and 108 form a recessed portion 109A. The recessed portion 109A has the form of a substantially rectangular truncated cone of which the upper base corresponds to the opening of the insertion hole 109.

The upper core support 100 includes an engagement projection 100A on the front surface above the right pocket 101 and above the left pocket 105. Each engagement projection 100A includes a lower surface that is a flat surface extending in the vehicle transverse direction and the front-rear direction. Further, each engagement projection 100A includes a projected surface that is inclined so that a projection amount of the engagement projection 100A increases downward. The distance between the bottom wall 102 of the right pocket 101 and the lower surface of the engagement projection 100A, which is arranged above the right pocket 101, is greater than the vertical length of the right fastening portion 36. Also, the distance between the bottom wall 106 of the left pocket 105 and the lower surface of the engagement projection 100A, which is located above the left pocket 105, is greater than the vertical length of the left fastening portion 37.

In the sixth embodiment, the right fastening portion 36, the right pocket 101, the left fastening portion 37, and the left pocket 105 correspond to a tentative attachment portion that tentatively attaches the hood lock device 30 to the upper core support 100 using fitting force.

A series of operations for attaching the hood lock device 30 to the upper core support 100 and its advantages will now be described in detail.

When tentatively attaching the hood lock device 30 to the upper core support 100, the right fastening portion 36 is inserted into the right pocket 101 from above and fitted in the right pocket 101, and the left fastening portion 37 is inserted into the left pocket 105 from above and fitted in the left pocket 105.

When tentatively attaching the hood lock device 30 to the upper core support 100, the rear surfaces of the fastening portions 36 and 37 come into contact the corresponding engagement projections 100A. However, the projected surface of the engagement projection 100A is inclined so that the projection amount of the engagement projection 100A increases downward. Accordingly, the rear surfaces of the fastening portions 36 and 37 are not obstructed by the engagement projections 100A. Thus, the fastening portions 36 and 37 are smoothly fitted in the corresponding the pockets 101 and 105.

Further, when fitting the fastening portions 36 and 37 into the corresponding pockets 101 and 105, the front walls 104 and 108 of the pockets 101 and 105 are elastically deformed and bent forward. When the upper ends of the fastening portions 36 and 37 pass the corresponding engagement projections 100A, the front walls 104 and 108 recover from the elastic deformation. Accordingly, the inner surfaces of the front walls 104 and 108 press the fastening portions 36 and 37 rearward. In this manner, the fastening portions 36 and 37 are held between the front surface of the upper core support 100 (specifically, front surface of blind nut 22) and the inner surfaces of the corresponding pockets 101 and 105. In other words, the fastening portions 36 and 37 are fitted in the corresponding pockets 101 and 105. This restricts separation of the fastening portions 36 and 37 from the corresponding pockets 101 and 105. Even if the hood lock device 30 is moved upward, the upper ends of the fastening portions 36 and 37 abut the lower surfaces of the engagement projections 100A. This restricts separation of the hood lock device 30 from the upper core support 100.

In accordance with the sixth embodiment, the hood lock device 30 can be tentatively attached to the upper core support 100 through a simple operation of fitting the fastening portions 36 and 37 in the corresponding pockets 101 and 105.

Also, in the sixth embodiment, the distance between the right wall 103 of the right pocket 101 and the left wall 107 of the left pocket 105 is greater than the distance between the right end of the right fastening portion 36 and the left end of the left fastening portion 37. This allows for relative movement of the fastening portions 36 and 37 in the vehicle transverse direction within the pockets 101 and 105. Thus, in this case, even though the hood lock device 30 is tentatively attached to the upper core support 100, the hood lock device 30 is slidable and movable in the vehicle transverse direction relative to the upper core support 100.

In the sixth embodiment, the pockets 101 and 105 and the engagement projection 100A are shaped to restrict separation of the fastening portions 36 and 37 from the pockets 101 and 105 and allow movement of the fastening portions 36 and 37 relative to the pockets 101 and 105.

Subsequently, in the operation for attaching the hood lock device 30 to the upper core support 100, the attachment position of the hood lock device 30 is adjusted by closing the hood 12 in a state in which the hood lock device 30 is tentatively attached to the upper core support 100 that is fixed to the vehicle 10.

Then, the hood lock device 30 is fastened to the upper core support 100. More specifically, a fastening bolt is inserted through the insertion hole 39 of the lower fastening portion 38 of the hood lock device 30 and fastened to the blind nut 22 of the upper core support 100. Further, another bolt is inserted through the insertion hole 109 of the front wall 104 of the right pocket 101 and the insertion hole 39 of the right fastening portion 36 and fastened to the blind nut 22 of the upper core support 100. Then, another bolt is inserted through the insertion hole 109 of the front wall 104 of the left pocket 105 and the insertion hole 39 of the left fastening portion 37 and fastened to the blind nut 22 of the upper core support 100.

In the sixth embodiment, the walls of the insertion hole 109 in each of the front walls 104 and 108 define the recessed portion 109A that has the form of a substantially rectangular truncated cone of which the upper base is the opening of the insertion hole 109. Accordingly, when inserting bolts through the insertion holes 109 of the front walls 104 and 108, the distal ends of the bolts are guided by the surfaces of recessed portion 109A into the insertion holes 109. This facilitates fastening of the bolts to fix the hood lock device 30 to the upper core support 100.

The sixth embodiment has the above-described advantages (1) to (4).

### Seventh Embodiment

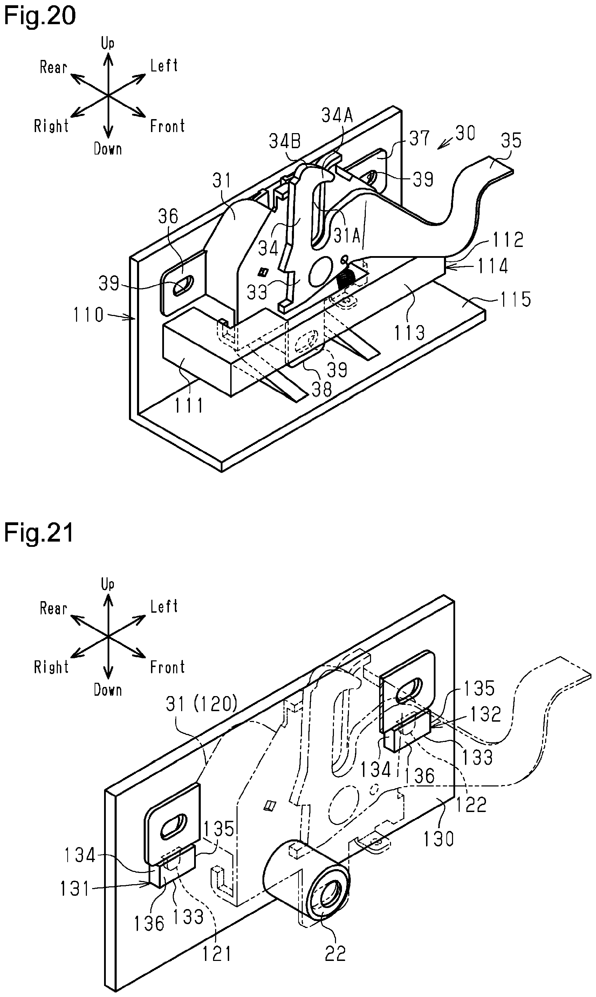

With reference to Figs. 19 and 20, an attachment structure of a hood lock device in accordance with a seventh embodiment will now be described focusing on differences from the first embodiment. Same reference numerals are given to those components that are the same as the corresponding components of the first embodiment. Such components will not be described in detail.

In the seventh embodiment, the upper core support differs only in shape from the first embodiment.

The shape of the upper core support in accordance with the seventh embodiment will now be described.

As shown in Figs. 19 and 20, an upper core support 110 includes an engagement portion 114 on the front surface at a position corresponding to the hood lock device 30. The engagement portion 114 has the form of a gate that is formed by two side walls (specifically, right side wall 111 and left side wall 112) and a front wall 113 that connects the two side walls 111 and 112. In the seventh embodiment, the engagement portion 114 corresponds to a tentative attachment portion that tentatively attaches the hood lock device 30 to the upper core support 110 using fitting force.

The right side wall 111 extends in the front-rear direction at a position rightward from the base 31 of the hood lock device 30 and downward from the right fastening portion 36. Further, the left side wall 112 extends in the front-rear direction at a position leftward from the base 31 of the hood lock device 30 and downward from the left fastening portion 37. The distance between the right side wall 111 and the left side wall 112 in the vehicle transverse direction is greater than the length of the base 31 of the hood lock device 30 in the vehicle transverse direction. Accordingly, when the hood lock device 30 is fitted in the engagement portion 114 of the upper core support 110 to tentatively attach the hood lock device 30 to the upper core support 110, gaps are formed between the outer surfaces of the base 31 and inner surfaces of the two side walls 111 and 112. In the seventh embodiment, even when the hood lock device 30 is tentatively attached to the upper core support 110, movement of the hood lock device 30 relative to the upper core support 110 is allowed in the vehicle transverse direction over the length corresponding to each gap.

The front wall 113 extends in the vehicle transverse direction and connects projected ends of the two side walls 111 and 112. When the hood lock device 30 is fitted in the engagement portion 114 of the upper core support 110, the rear surface of the front wall 113 contacts the front surface of the base 31 of the hood lock device 30 at the right side and the left side. In the seventh embodiment, contact of the rear surface of the front wall 113 and the front surface of the base 31 of the hood lock device 30 restricts movement of the hood lock device 30 in the front-rear direction when the hood lock device 30 is tentatively attached.

The upper core support 110 includes a bottom wall portion 115 that has the form of a plate extending in the front-rear direction and the vehicle transverse direction below the hood lock device 30. The bottom wall portion 115 is arranged at a position such that when the hood lock device 30 is attached at a correct position, the end of the lower fastening portion 38 of the hood lock device 30 comes into contact with the bottom wall portion 115. In the seventh embodiment, when tentatively attaching the hood lock device 30 to the upper core support 110, the lower fastening portion 38 of the hood lock device 30 contacts the bottom wall portion 115 of the upper core support 110. This sets the position of the hood lock device 30 in the vertical direction.

In the seventh embodiment, the hood lock device 30 is tentatively attached to the upper core support 110 through an operation such as inserting the hood lock device 30 into the engagement portion 114 from above.

When performing the tentative attachment, the position of the hood lock device 30 in the vertical direction can be set through a simple operation of bringing the end of the lower fastening portion 38 of the hood lock device 30 into contact with the bottom wall portion 115 of the upper core support 110. Further, when the hood lock device 30 is tentatively attached to the upper core support 110, the rear surface of the front wall 113 contacts the front surface of the base 31 of the hood lock device 30. This contact restricts movement of the hood lock device 30 in the front-rear direction. Also, the distance between the two side walls 111 and 112 in the vehicle transverse direction is greater than the length of the base 31 of the hood lock device 30 in the vehicle transverse direction. Thus, even when the hood lock device 30 is tentatively attached to the upper core support 110, movement of the hood lock device 30 in the vehicle transverse direction relative to the upper core support 110 is allowed over the length corresponding to each gap formed between the outer surfaces of the base 31 and the inner surfaces of the two side walls 111 and 112.

In the seventh embodiment, the engagement portion 114 is shaped to restrict separation of the hood lock device 30 from the engagement portion 114 and allow movement of the hood lock device 30 relative to the engagement portion 114.

In accordance with the seventh embodiment, the hood lock device 30 can be tentatively attached to the upper core support 110 through a simple operation of inserting the hood lock device 30 into the engagement portion 114 from above and fitting the hood lock device 30 in the engagement portion 114.

The seventh embodiment has the above-described advantages (1) to (4).

### Eighth Embodiment

With reference to Figs. 21 to 23, an attachment structure of a hood lock device in accordance with an eighth embodiment will now be described focusing on differences from the first embodiment. Same reference numerals are given to those components that are the same as the corresponding components of the first embodiment. Such components will not be described in detail.

In the eighth embodiment, the right fastening portion and the left fastening portion of the hood lock device and the upper core support differ in shape from the first embodiment.

The shapes of the right fastening portion, the left fastening portion, and the upper core support in accordance with the eighth embodiment will now be described.

First, the right fastening portion and the left fastening portion in accordance with the eighth embodiment will be described.

As shown Figs. 21 to 23, a hood lock device 120 includes a right engagement piece 121 that is integrally formed with the right fastening portion 36 and projects downward from the lower end of the right fastening portion 36. Further, the hood lock device 120 includes a left engagement piece 122 that is integrally formed with the left fastening portion 37 and projects downward from the lower end of the left fastening portion 37. The engagement pieces 121 and 122 each have the form of a substantially rectangular flat plate extending in the vehicle transverse direction and the vertical direction. The engagement pieces 121 and 122 each include a front surface that is roughened (knurled in eighth embodiment).

The shape of an upper core support 130 in accordance with the eighth embodiment will now be described.

The front surface of the upper core support 130 includes a right pocket 131 for accommodating the right engagement piece 121 and a left pocket 132 for accommodating the left engagement piece 122. The pockets 131 and 132 each include a bottom wall 133 arranged at the lower side, a right wall 134 arranged at the right side, a left wall 135 arranged at the left side, and a front wall 136 arranged at the front side. Each bottom wall 133 has the form of a plate extending in the vehicle transverse direction and the front-rear direction. Each right wall 134 has the form of a plate extending in the vertical direction and the front-rear direction. Each left wall 135 has the form of a plate extending in the vertical direction and the front-rear direction. Each front wall 136 has the form of a plate extending in the vehicle transverse direction and the vertical direction.

The operation for tentatively attaching the hood lock device 120 to the upper core support 130 will now be described with the advantages.

When tentatively attaching the hood lock device 120 to the upper core support 130, the right engagement piece 121, which is integrated with the right fastening portion 36, is inserted and fitted into the right pocket 131 from above, and the left engagement piece 122, which is integrated with the left fastening portion 37, is inserted and fitted into the left pocket 132 from above.

As a result, the rear surface of the hood lock device 120 (specifically, rear surface of right fastening portion 36, rear surface of left fastening portion 37, and rear surface of lower fastening portion 38) is pressed against the front surfaces of the blind nuts 22 of the upper core support 130. Also, the front surface of the hood lock device 120 (specifically, front surface of right engagement piece 121 and front surface of left engagement piece 122) is pressed against the rear surfaces of the front walls 136 of the pockets 131 and 132. Accordingly, the hood lock device 120 is held between the front surface of the upper core support 130 (front surfaces of blind nuts 22) and the rear surfaces of the front walls 136 of the pockets 131 and 132.

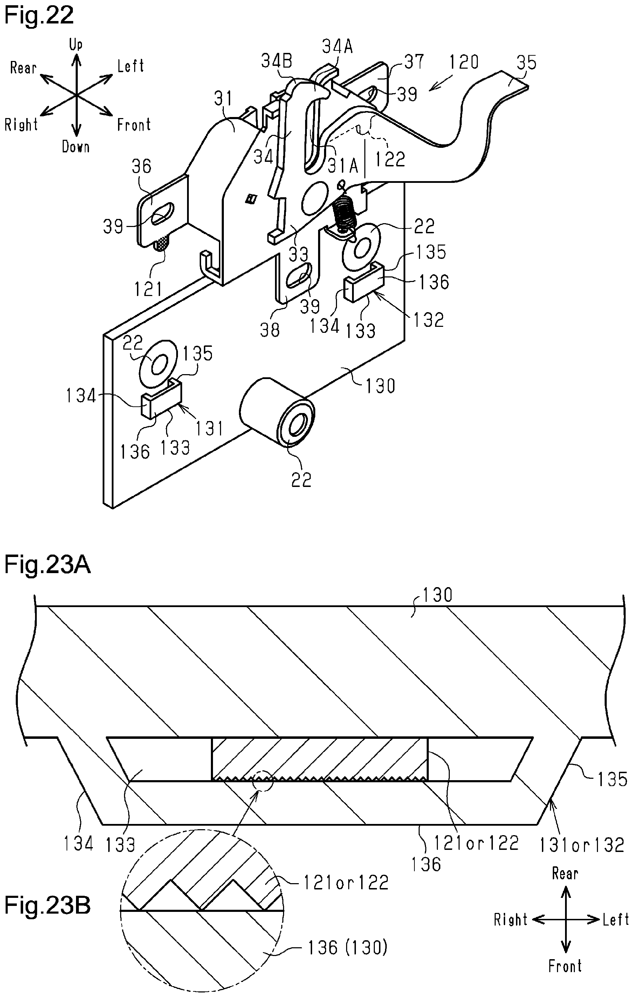

This restricts separation of the engagement pieces 121 and 122 from the pockets 131 and 132 and, in turn, separation of the hood lock device 120 from the upper core support 130. In the eighth embodiment, as shown in Figs. 23A and 23B, the front surfaces of the engagement pieces 121 and 122, that is, the surfaces that contact the rear surfaces of the front wall 136 of the pockets 131 and 132, are roughened. Accordingly, compared to when the front surfaces of the engagement pieces 121 and 122 are flat and smooth, this further restricts separation of the engagement pieces 121 and 122 from the pockets 131 and 132.

In accordance with the eighth embodiment, the hood lock device 120 can be tentatively attached to the upper core support 130 through a simple operation of inserting and fitting the two engagement pieces 121 and 122, which are integrated with the fastening portions 36 and 37, into the corresponding pockets 131 and 132 from above.

In the eighth embodiment, the right engagement piece 121, the right pocket 131, the left engagement piece 122, and the left pocket 132 correspond to a tentative attachment portion that tentatively attaches the hood lock device 120 to the upper core support 130 using fitting force.

Further, in the eighth embodiment, the distance between the right wall 134 and the left wall 135 of the pockets 131 and 132 is greater than the length of the engagement pieces 121 and 122 in the vehicle transverse direction. This allows for movement of the engagement pieces 121 and 122 in the vehicle transverse direction within the pockets 131 and 132. Thus, in this case, even when the hood lock device 120 is tentatively attached to the upper core support 130, the hood lock device 120 is slidable and movable in the vehicle transverse direction relative to the upper core support 130.

In the eighth embodiment, the engagement pieces 121 and 122 and the pockets 131 and 132 are shaped to restrict separation of the engagement pieces 121 and 122 from the pockets 131 and 132 and allow movement of the engagement pieces 121 and 122 in the pockets 131 and 132.

The eighth embodiment has the above-described advantages (1) to (4).

### Ninth Embodiment

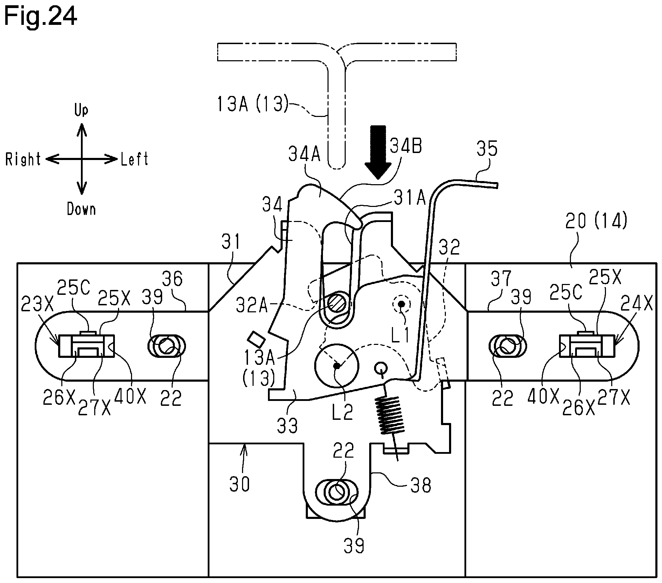

With reference to Figs. 24 to 28, an attachment structure of a hood lock device in accordance with a ninth embodiment will now be described focusing on differences from the first embodiment. Same reference numerals are given to those components that are the same as the corresponding components of the first embodiment. Such components will not be described in detail.

The structure for attaching the hood lock device 30 to the upper core support 20 will now be described.

The hood lock device 30 includes three fastening portions 36, 37, and 38 that are fastened to the upper core support 20. Specifically, a right fastening portion 36 is arranged at the right side of the base 31 projecting rightward, a left fastening portion 37 is arranged at the left side of the base 31 projecting leftward, and a lower fastening portion is arranged at a lower part of the base 31 projecting downward. Each of the fastening portions 36, 37, and 38 has the form of a substantially flat plate extending in the vertical direction and the vehicle transverse direction and includes an elongated insertion hole 39 extending in the vehicle transverse direction. Further, a substantially rectangular through hole (fitting hole 40X) is formed at the right side of the insertion hole 39 of the right fastening portion 36 and at the left side of the insertion hole 39 of the left fastening portion 37.

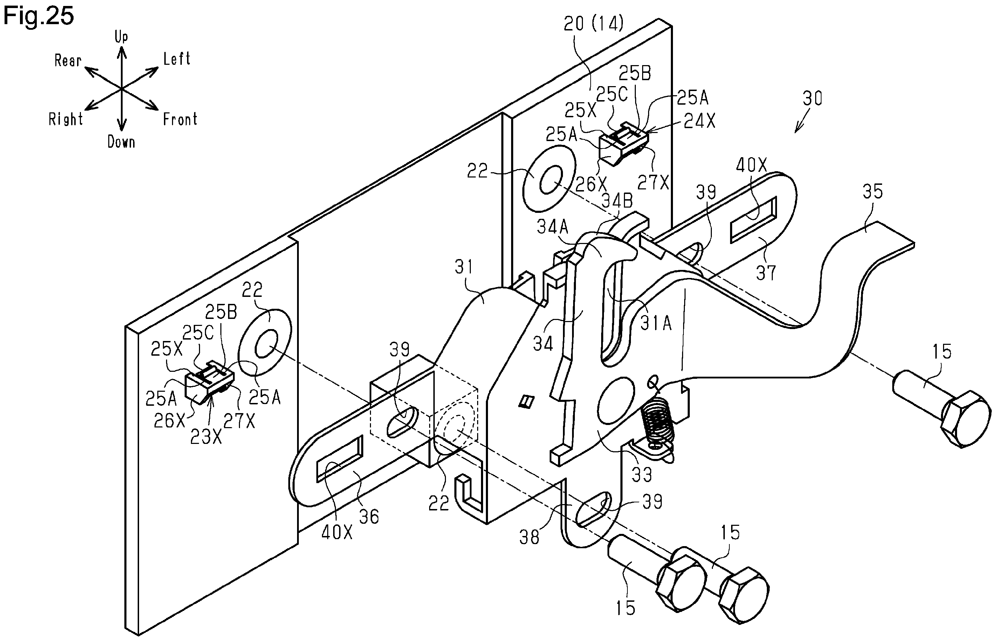

The upper core support 20 includes three blind nuts 22 each having female threads. The three blind nuts 22 respectively correspond to the insertion holes 39 of the fastening portions 36, 37, and 38 of the hood lock device 30. When fastening the hood lock device 30 to the upper core support 20, three bolts (Fig. 25) are respectively inserted through the insertion holes 39 of the fastening portions 36, 37, and 38 and fastened to the blind nuts 22. This fastens and fixes the hood lock device 30 to the upper core support 20.

As shown in Figs. 24 to 26, a right fitting projection 23X is arranged on the upper core support 20 at a position corresponding to the fitting hole 40X of the right fastening portion 36. Also, a left fitting projection 24X is arranged on the upper core support 20 at the position corresponding to the fitting hole 40X of the left fastening portion 37. When attaching the hood lock device 30 to the upper core support 20, the right fitting projection 23X is inserted and fitted into the fitting hole 40X of the right fastening portion 36, and the left fitting projection 24X is inserted and fitted into the fitting hole 40X of the left fastening portion 37.

The right fitting projection 23X has the same structure as the left fitting projection 24X. Specifically, the fitting projections 23X and 24X are each U-shaped and each include a projected wall 25X at the upper side, a right wall 26X at the right side, and a left wall 27X at the left side. The projected wall 25X extends in the vehicle transverse direction and the front-rear direction, the right wall 26X extends in the vertical direction and the front-rear direction, and the left wall 27X extends in the vertical direction and the front-rear direction. The right wall 26X and the left wall 27X each include a front surface that is inclined so that the distance to the front surface of the upper core support 20 decreases downward.

In the ninth embodiment, the distance between the projected surface of the projected wall 25X and the lower end of the right wall 26X, and the distance between the projected surface of the projected wall 25X and the lower end of the left wall 27X are substantially equal to the vertical length of the fitting hole 40X. Further, the distance between the right side surface of the right wall 26X and the left side surface of the left wall 27X is less than the length of the fitting hole 40X in the vehicle transverse direction. Accordingly, in a state in which the fitting projections 23X and 24X are fitted in the fitting holes 40X but not fastened by the bolts 15 (tentative attachment state), movement of the fitting projections 23X and 24X in the vehicle transverse direction within the fitting hole 40X is allowed while movement of the fitting projections 23X and 24X in the vertical direction is restricted. In this manner, in the tentative attachment state, the hood lock device 30 is slidable in the vehicle transverse direction relative to the upper core support 20.

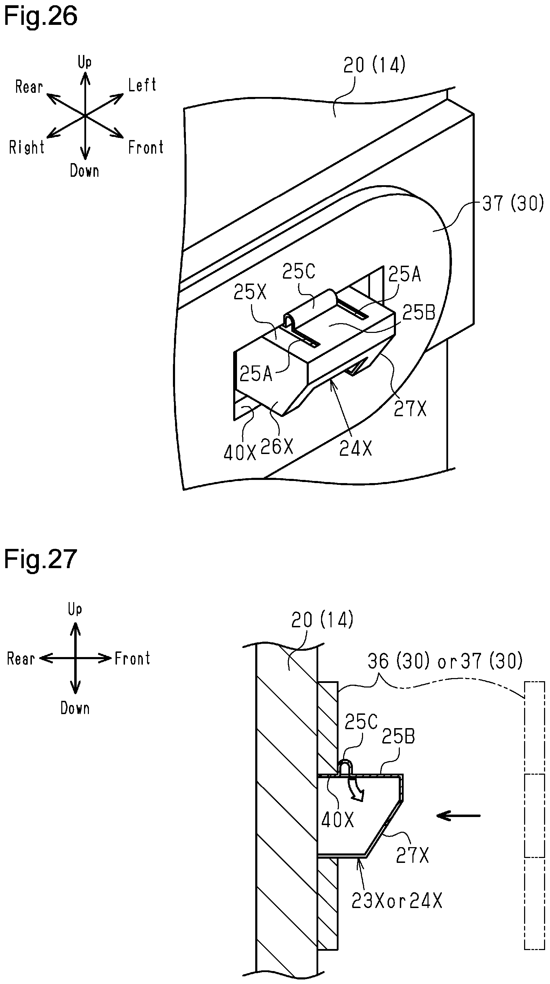

The projected wall 25X of the right fitting projection 23X is spaced apart from the projected wall 25X of the left fitting projection 24X in the vehicle transverse direction. Each projected wall 25X includes two cutout parts 25A extending frontward from the rear end. The portion of the projected wall 25X between the two cutout parts 25A is referred to as a spring portion 25B. The spring portion 25B is elastically deformable when bent in the vertical direction relative to the peripheral portion extending around the spring portion 25B. The spring portion 25B includes an outer surface (top surface) on which a projection (engagement projection 25C) is arranged extending in the vehicle transverse direction at an intermediate part with respect to the front-rear direction. As shown in Fig. 27, when the hood lock device 30 is attached to the upper core support 20, the engagement projection 25C contacts the edge (open edge) of the fitting hole 40X in the front surface of the corresponding one of the fastening portions 36 and 37. In the ninth embodiment, the spring portion 25B corresponds to an engagement portion.

A series of operations for attaching the hood lock device 30 to the upper core support 20 and its advantages will now be described in detail.

As shown in Figs. 24 and 25, when attaching the hood lock device 30 to the upper core support 20, the right fitting projection 23X is fitted into the fitting hole 40X of the right fastening portion 36, and the left fitting projection 24X is fitted into the fitting hole 40X of the left fastening portion 37. More specifically, as indicated by the white arrow in Fig. 27, the fitting projections 23X and 24X are inserted into the fitting holes 40X when the spring portions 25B are elastically deformed and inserted into the fitting projections 23X and 24X. When the fastening portions 36 and 37 pass the corresponding engagement projections 25C of the spring portions 25B, the spring portions 25B recover from the elastic deformation. In this manner, the engagement projections 25C of the spring portions 25B are caught by the edges of the fitting holes 40X in the front surface of the corresponding fastening portions 36 and 37 (as shown in Fig. 27). In other words, each engagement projection 25C is engaged with the edge of the corresponding fitting hole 40X. This restricts separation of the fitting projections 23X and 24X from the fitting holes 40X. Consequently, separation of the hood lock device 30 from the upper core support 20 is restricted. In accordance with the ninth embodiment, the hood lock device 30 can be tentatively attached to the core 20 through a simple operation of fitting the fitting projections 23X and 24X into the fitting holes 40X.

Also, in the ninth embodiment, the right fastening portion 36 (fitting hole 40X) is arranged at the right side of the hood lock device 30 (Fig. 24). The right fitting projection 23X is arranged on the upper core support 20 in correspondence with the right fastening portion 36. The left fastening portion 37 (fitting hole 40X) is arranged at the left side of the hood lock device 30. The left fitting projection 24X is arranged on the upper core support 20 in correspondence with the left fastening portion 37. Accordingly, when the hood lock device 30 is tentatively attached to the upper core support 20, the two sides of the hood lock device 30 are supported by the upper core support 20. Therefore, the hood lock device 30 is stably supported by the upper core support 20.

The upper core support 20, to which the hood lock device 30 is tentatively attached, may be transported to an assembly factory where the vehicle 10 is assembled or to another work station in an assembly factory for a subsequent step. In accordance with the ninth embodiment, the hood lock device 30 is attached to the upper core support 20 by fitting the fitting projections 23X and 24X to the corresponding fitting holes 40X of the fastening portions 36 and 37. This restricts separation of the hood lock device 30 from the upper core support 20 when transporting the upper core support 20 in a state in which the hood lock device 30 is tentatively attached.

Subsequently, the attachment position of the hood lock device 30 is adjusted. Specifically, the hood 12 is closed in a state in which the hood lock device 30 is tentatively attached to the upper core support 20, which is fixed to the vehicle 10.

In this case, the hook 13A of the hood striker 13 first abuts the upper end surface 34B of the hook 34A of the catch 33. The upper end surface 34B of the hook 34A is inclined downward toward the tip. Accordingly, when the hook 13A of the hood striker 13 abuts the upper end surface 34B, the catch 33 is pushed by the hook 13A of the hood striker 13 and pivoted in the counterclockwise direction in the front view. In this manner, the hook 13A of the hood striker 13 forces the hook 34A of the catch 33 away and enters the cutout 31A of the base 31.

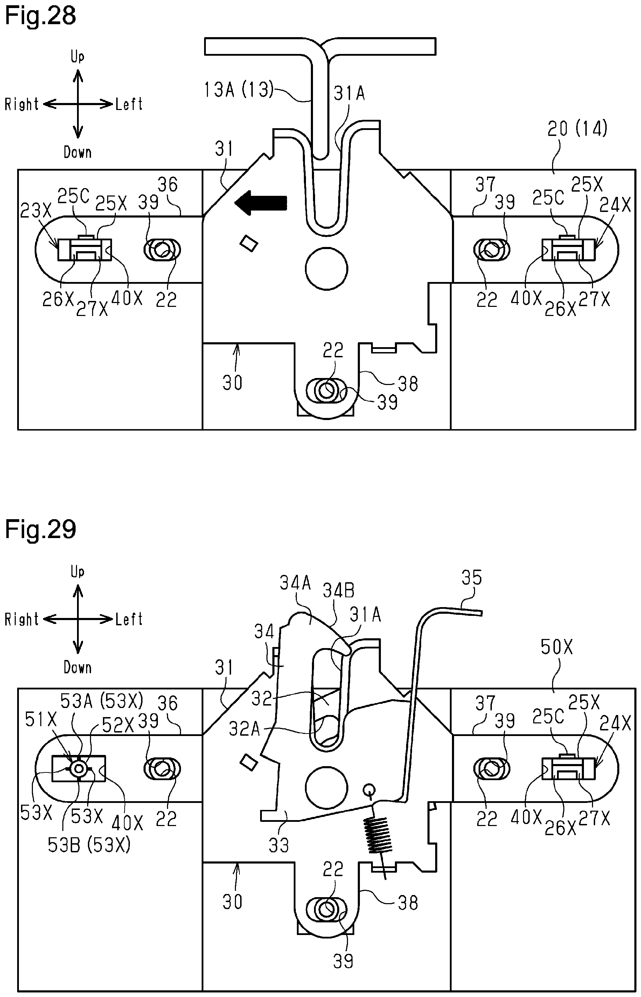

Fig. 28 shows the positional relationship of the base 31 of the hood lock device 30 and the hook 13A of the hood striker 13 when the tentative attachment position of the hood lock device 30 is shifted leftward (rightward in Fig. 28). In this case, as shown in Fig. 28, the hook 13A of the hood striker 13 abuts the right side (left side in Fig. 28) of the inner surface of the cutout 31A of the base 31. As described above, the hood lock device 30 is movable relative to the upper core support 20 in the vehicle transverse direction even in a state tentatively attached to the upper core support 20. Thus, when the hook 13A of the hood striker 13 abuts the inner surface of the cutout 31A (specifically, surface at right side) and presses the inner surface of the cutout 31A, the hood lock device 30 moves rightward relative to the upper core support 20 as indicated by the black arrow in Fig. 28. When the tentative attachment position of the hood lock device 30 is shifted rightward, the hook 13A of the hood striker 13 abuts the left side of the inner surface of the cutout 31A. This pushes the inner surface and moves the hood lock device 30 leftward relative to the upper core support 20. When the tentative attachment position of the hood lock device 30 is located within an allowable range, the hood lock device 30 does not move relative to the upper core support 20 when closing the hood 12.

In this manner, when the hood 12 is closed in a state in which the hood lock device 30 is tentatively attached to the upper core support 20, the hood lock device 30 is located at a position in the vehicle transverse direction that does not hinder smooth entry of the hook 13A of the hood striker 13 into the cutout 31A of the base 31.

Then, the hood lock device 30 is fastened to the upper core support 20. Specifically, three fastening bolts 15 (Fig. 25) are respectively inserted through the insertion holes 39 of the fastening portions 36, 37, and 38 of the hood lock device 30 and fastened to the blind nuts 22 of the upper core support 20. This fastens and fixes the hood lock device 30 to the upper core support 20. In the ninth embodiment, the hood lock device 30 can be fastened and fixed by the bolts 15 in a state in which the hood 12 is locked in the closed state.

In accordance with the ninth embodiment, the hood lock device 30 can be tentatively attached to the upper core support 20 through a simple operation of fitting the fitting projections 23X and 24X of the upper core support 20 into the fitting holes 40X of the fastening portions 36 and 37 of the hood lock device 30. This allows the hood lock device 30 to be supported by the upper core support 20 before the hood lock device 30 is fastened to the upper core support 20. Further, in the state of tentative attachment, the position of the hood lock device 30 can be adjusted in the vehicle transverse direction by moving the hood lock device 30 relative to the upper core support 20. In this manner, in accordance with the ninth embodiment, the tentative attachment and position adjustment of the hood lock device 30 are easily performed. This facilitates the attachment operation of the hood lock device 30.

In the ninth embodiment, the upper core support 20 of the radiator core support 14 is formed from a synthetic resin material. Typically, the upper core support 20, which is formed from a synthetic resin, tends to include a greater manufacturing error compared to an upper core support, which is formed from a metal. Accordingly, with the attachment structure of the ninth embodiment, in which the hood lock device 30 is fastened to the upper core support 20 formed from a synthetic resin, the relative positions of the hood lock device 30 and the hood striker 13 may be shifted. With the attachment structure, in which the hood lock device 30 is fastened to the upper core support 20 formed from a synthetic resin, the ninth embodiment facilitates the attachment operation of the hood lock device 30 while the position of the hood lock device 30 is adjusted in the vehicle transverse direction.

The ninth embodiment has the following advantage in addition to the above-described advantages (1), (2), and (4).

(9) The spring portions 25B including the engagement projections 25C are elastically deformed and respectively inserted into the fitting holes 40X of the fitting projections 23X and 24X. This allows the hood lock device 30 to be tentatively attached to the upper core support 20 when the engagement projection 25C is engaged with the edge of the fitting hole 40X. In this manner, the engagement of the engagement projections 25C and the edge of the fitting holes 40X restricts separation of the fitting projections 23X and 24X from the fitting holes 40X. Consequently, separation of the hood lock device 30 from the upper core support 20 is restricted.

### Tenth Embodiment

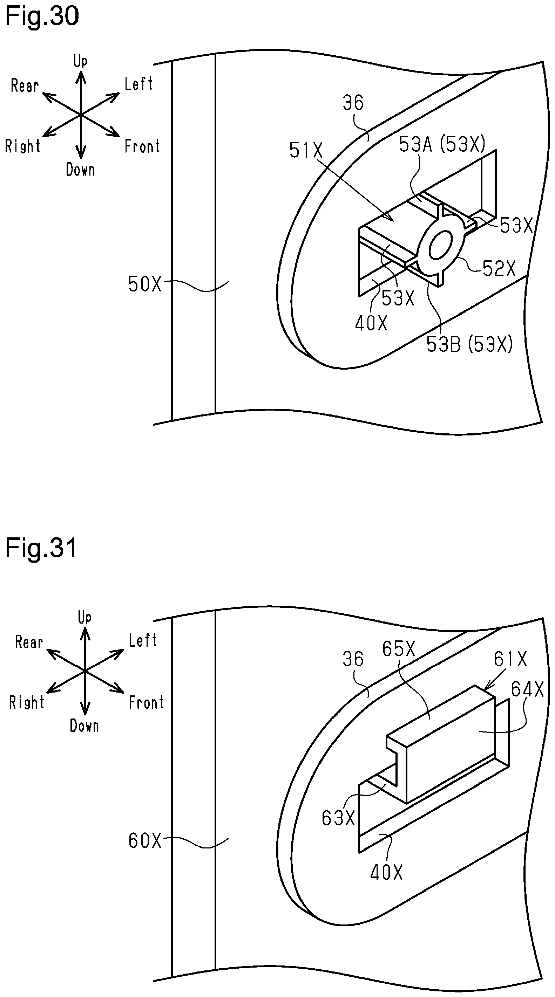

With reference to Figs. 29 and 30, an attachment structure of a hood lock device in accordance with a tenth embodiment will now be described focusing on differences from the ninth embodiment. Same reference numerals are given to those components that are the same as the corresponding components of the ninth embodiment. Such components will not be described in detail.

In the tenth embodiment, the right fitting projection differs only in shape from the ninth embodiment.

The right fitting projection of the tenth embodiment will now be described.

As shown in Figs. 29 and 30, a right fitting projection 51X includes a cylindrical portion 52X and four ribs 53X. The cylindrical portion 52X extends in the front-rear direction. The four ribs 53X are arranged on the outer circumferential surface of the cylindrical portion 52X. The four ribs 53X are arranged in intervals of 90 degrees in a circumferential direction of the outer circumferential surface of the cylindrical portion 52X. The four ribs 53X extend radially. In the four ribs 53X, the rib 53X located at an upper position is referred to as an upper rib 53A, and the rib 53X located at a lower position is referred to as a lower rib 53B. The upper rib 53A and the lower rib 53B extend in the vertical direction, and the distance between the projected surface of the upper rib 53A and the lower surface of the lower rib 53B is substantially equal to the vertical length of the fitting hole 40X. When attaching the hood lock device 30 to an upper core support 50X, the right fitting projection 51X is inserted and fitted into the fitting hole 40X of the right fastening portion 36.

In a state in which the right fitting projection 51X is fitted in the fitting hole 40X of the right fastening portion 36 but not fastened by the bolt 15 (tentative attachment state), movement of the right fitting projection 51X in the vehicle transverse direction within the fitting hole 40X is allowed while movement of the right fitting projection 51X in the vertical direction is restricted. In this manner, in the tentative attachment state, the hood lock device 30 is slidable in the vehicle transverse direction relative to the upper core support 50X.

The tenth embodiment also has the above-described advantages (1), (2), (4), and (9).

### Eleventh Embodiment

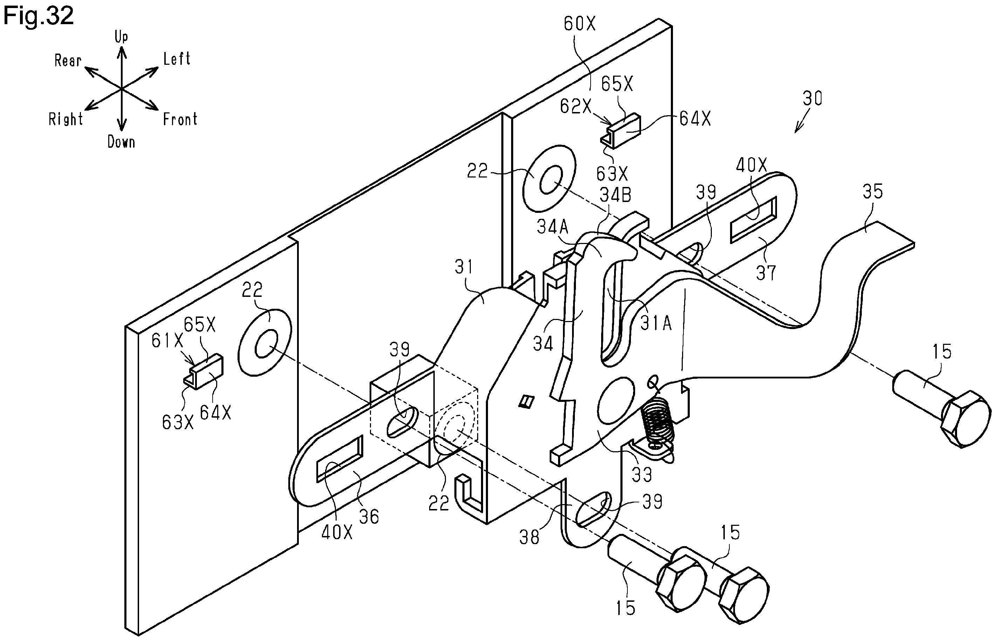

With reference to Figs. 31 and 32, an attachment structure of a hood lock device in accordance with an eleventh embodiment will now be described focusing on differences from the ninth and tenth embodiments. Same reference numerals are given to those components that are the same as the corresponding components of the ninth and tenth embodiments. Such components will not be described in detail.

In the eleventh embodiment, the right fitting projection and the left fitting projection differ only in shape from the ninth and tenth embodiments.

The shape of the right fitting projection and the left fitting projection of the eleventh embodiment will now be described.

As shown in Figs. 31 and 32, the right fitting projection 61X has the same structure as the left fitting projection 62X. The fitting projections 61X and 62X each include a lower wall 63X at the lower side, a front wall 64X at the front side, and an upper wall 65X at the upper side. The lower wall 63X has the form of a plate extending in the front-rear direction and the vehicle transverse direction. The front wall 64X has the form of a plate extending in the vertical direction and the vehicle transverse direction. The upper wall 65X has the form of a plate extending in the front-rear direction and the vehicle transverse direction. The lower wall 63X is arranged on the front surface of the upper core support 60X. The front wall 64X extends upward from the front end of the lower wall 63X. The upper wall 65X extends rearward from the upper end of the front wall 64X.

The distance between the lower surface of the lower wall 63X and the upper surface of the upper wall 65X in the vertical direction is less than the vertical length of the fitting hole 40X. This allows the fitting projections 61X and 62X to be inserted into the fitting holes 40X. Further, a gap is formed between the rear end of the front wall 64X and the front surface of the upper core support 60X. The length between the rear surface of the upper wall 65X and the front surface of the upper core support 60X in the front-rear direction is substantially equal to the thickness of the fastening portions 36 and 37.

When attaching the hood lock device 30 to the upper core support 60X, the right fitting projection 61X is inserted and fitted into the fitting hole 40X of the right fastening portion 36, and the left fitting projection 62X is inserted and fitted into the fitting hole 40X of the left fastening portion 37.

More specifically, the right fitting projection 61X is inserted into the fitting hole 40X of the right fastening portion 36, and the left fitting projection 62X is inserted into the fitting hole 40X of the left fastening portion 37. Then, the fastening portions 36 and 37 are inserted between the front surface of the upper core support 60X and the rear surfaces of the upper walls 65X of the fastening portions 36 and 37. In other words, the hood lock device 30 is moved downward relative to the upper core support 60X. In this manner, the upper surface of each fitting hole 40X comes into contact with the upper surface of the lower wall 63X of the corresponding one of the fitting projection 61X and 62X, and a portion of each one of the fastening portions 36 and 37 upward from the corresponding fitting hole 40X is fitted between the rear surface of the upper wall 65X and the front surface of the upper core support 60X (Fig. 31).

In the eleventh embodiment, separation of the fitting projections 61X and 62X from the corresponding fitting holes 40X is restricted by fitting the right fitting projection 61X to the fitting hole 40X of the right fastening portion 36 and fitting the left fitting projection 62X to the fitting hole 40X of the left fastening portion 37. This restricts separation of the hood lock device 30 from the upper core support 60X. In accordance with the eleventh embodiment, the hood lock device 30 can be tentatively attached to the upper core support 60X through a simple operation of fitting the fitting projections 61X and 62X into the fitting holes 40X of the corresponding fastening portions 36 and 37.

Further, in the eleventh embodiment, the length of the fitting projections 61X and 62X in the vehicle transverse direction is less than the length of the corresponding fitting holes 40X of the fastening portions 36 and 37 in the vehicle transverse direction. In this manner, in the tentative attachment state, movement of the fitting projections 61X and 62X in the vehicle transverse direction within the corresponding fitting holes 40X of the fastening portions 36 and 37 is allowed, while movement of the fitting projections 61X and 62X in the vertical direction is restricted. Therefore, in the tentative attachment state, the hood lock device 30 is slidable in the vehicle transverse direction relative to the upper core support 60X.

The eleventh embodiment also has the above-described advantages (1), (2), (4), and (9).

### Other Embodiments

The above embodiments may be modified as follows.

In each embodiment, the attachment position of the hood lock device may be adjusted in any manner. More specifically, the adjustment of the position of the hood lock device does not have to be performed when closing the hood in a state in which the hood lock device is tentatively attached to the upper core support. For example, a technician may manually move the hood lock device while visually checking the relative positions of the hood striker and the hood lock device.

In the second embodiment, the two right engagement pieces 41 and the two left engagement pieces 45 may each have a cross section that is wave-shaped, crank-shaped, or square-wave-shaped. Such structure also allows a flex portion of the engagement pieces 41 and 45 to be longer compared to when the engagement pieces have the form of a flat plate. Thus, the engagement pieces 41 and 45 are more flexible.

In the two right engagement pieces and the two left engagement pieces in accordance with the first to third embodiments, the thickness of the upper engagement pieces may be the same as that of the lower engagement pieces. Alternatively, the thickness of the lower engagement pieces may be less than that of the upper engagement pieces.

In any one of the first to sixth and eighth embodiment, the hood lock device may include the tentative attachment portion at only the right side or the left side. For example, when the tentative attachment portion is arranged at only one side of the hood lock device, a support may be arranged at the other side of the hood lock device to support the hood lock device (specifically, fastener) from below. Such a structure will avoid a situation in which the hood lock device is tilted such that the portion of the hood lock device that does not include the tentative attachment portion is moved downward during tentative attachment of the hood lock device by the weight of the hood lock device or the impact of the closing the hood.

In one example, the tentative attachment portion in accordance with the first embodiment may be arranged on the right side of the hood lock device, and the tentative attachment portion in accordance with the second embodiment may be arranged at the left side of the hood lock device. Two different tentative attachment portions in accordance with the first to sixth and eighth to eleventh embodiments may be combined.

In the ninth embodiment, the structure for restricting separation of the fitting projections 23X and 24X from the corresponding fitting holes 40X of the fastening portions 36 and 37 may be changed. More specifically, the fitting projections 23X and 24X may include a structure other than the spring portion 25B and the engagement projection 25C. In one example of such structure, a groove (fitting groove) is arranged in a proximal end of the upper surface and a proximal end of the lower surface of the fitting projections 23X and 24X. The grooves extend along the front surface of the upper core support 20. In this case, the vertical distance between the upper surface and the lower surface of the fitting projections 23X and 24X may be slightly greater than the vertical distance between the upper surface and the lower surface of the fitting hole 40X. Further, in this case, the vertical distance between the bottom surface of the fitting groove in the upper part of the fitting projections 23X and 24X and the bottom surface of the fitting groove in the lower part of the fitting projections 23X and 24X may be substantially equal to the vertical length of the fitting hole 40X. With this structure, the fitting projections 23X and 24X are pressed into the fitting holes 40X until the edges of the fitting holes 40X are fitted in the fitting grooves. In this manner, the edges of the fitting holes 40X are fitted in the fitting grooves of the fitting projections 23X and 24X. This restricts separation of the fitting projections 23X and 24X from the fitting holes 40X.

In the ninth embodiment, the upper core support may include a fitting projection only at the right side or the left side (right fitting projection 23X or left fitting projection 24X), and the hood lock device may include a fitting hole only in the right side or the left side (fitting hole 40X of right fastening portion 36 or fitting hole 40X of left fastening portion 37). In other words, one of the fitting hole 40X of the right fastening portion 36 and the fitting hole 40X of the left fastening portion 37 may be omitted. In this case, a support may be arranged at a portion of the hood lock device where the fitting hole is not arranged to support the hood lock device (specifically, fastener) from below. Such a structure will avoid a situation in which the hood lock device is tilted such that the portion of the hood lock device that does not include the tentative attachment portion is moved downward during tentative attachment of the hood lock device by the weight of the hood lock device or the impact of closing the hood.

In the tenth embodiment, the distance between the upper surface and the lower surface of the right fitting projection 51X in the vertical direction may be substantially equal to the vertical length of the fitting hole 40X of the right fastening portion 36, and the shape of the right fitting projection 51X may be changed in any manner. In one example, the right fitting projection may be cylindrical and extend in the front-rear direction. Alternatively, the right fitting projection may extend in the front-rear direction and have a cross section that is I-shaped, circular, cross-shaped, or H-shaped.

In each embodiment, the upper core support may include a fitting hole extending in the vehicle transverse direction, and the hood lock device may include a fitting projection projecting from the fastener. The fitting projection is fitted in the fitting hole in a mode in which the fitting projection is projected toward the upper core support and slidable in the vehicle transverse direction.

The attachment structure of the above-described embodiments can be applied to a hood lock device that is fastened to an upper core support of a radiator core support by an intermediary member (dedicated bracket). In this case, the intermediary member corresponds to the attachment portion.

The attachment structure of the above-described embodiments can be applied to a hood lock device that is fastened to an upper core support formed from a metal.

The attachment structure of the above-described embodiments can be applied to a hood lock device that is fastened to part of a vehicle main body other than a radiator core support (e.g. cross member). In other words, the attachment portion may be arranged on a vehicle main body or one of the elements forming the vehicle main body.

## Claims

1. An attachment structure of a hood lock device (30; 50; 60; 80; 120), wherein the hood lock device (30; 50; 60; 80; 120) is configured to be fastened to an attachment portion (20; 40; 70; 90; 100; 110; 130; 50X; 60X) arranged on a vehicle main body and configured to be engaged with a hood striker (13) arranged on an inner surface of a hood (12) of a vehicle (10) to lock the hood (12) in a closed state, the attachment structure comprising:
at least one tentative attachment portion configured to tentatively attach the hood lock device (30; 50; 60; 80; 120) to the attachment portion (20; 40; 70; 90; 100; 110; 130; 50X; 60X) using a fitting force in a state in which the attachment portion (20; 40; 70; 90; 100; 110; 130; 50X; 60X) and the hood lock device (30; 50; 60; 80; 120) are movable relative to each other in a vehicle transverse direction.

2. The attachment structure according to claim 1, wherein the at least one tentative attachment portion is one of two tentative attachment portions, and the two tentative attachment portions are respectively arranged at a vehicle-right portion and a vehicle-left portion of the hood lock device (30; 50; 60; 80; 120).

3. The attachment structure according to claim 1 or 2, wherein the at least one tentative attachment portion includes
two engagement pieces (23, 24; 41, 45; 71, 72; 84, 85) arranged on a first member, which is one of the attachment portion (20; 40; 70; 90) and the hood lock device (30; 50; 60; 80), wherein the two engagement pieces (23, 24; 41, 45; 71, 72; 84, 85) extend in the vehicle transverse direction at positions spaced apart in a vehicle vertical direction, and
an engagement portion (36, 37; 51, 52; 61, 62; 92) arranged on a second member, which is the other one of the attachment portion (20; 40; 70; 90) and the hood lock device (30; 50; 60; 80), wherein the engagement portion (36, 37; 51, 52; 61, 62; 92) extends in the vehicle transverse direction and is configured to be held between the two engagement pieces (23, 24; 41, 45; 71, 72; 84, 85).

4. The attachment structure according to claim 3, wherein
the engagement portion (51, 52) includes an end surface opposing the first member when tentatively attaching the hood lock device (50) to the attachment portion (20), and
the end surface of the engagement portion (51, 52) includes a surface that is curved away from the first member at a vehicle upper side and a vehicle lower side.

5. The attachment structure according to claim 3 or 4, wherein the engagement piece (41, 45) has an S-shaped cross section as viewed in the vehicle transverse direction.

6. The attachment structure according to any one of claims 3 to 5, wherein the engagement portion (51, 52) includes an upper wall (54) arranged at a vehicle upper side and extending in a vehicle front-rear direction, a lower wall (55) arranged at a vehicle lower side and extending in the vehicle front-rear direction, and a base wall (53) extending in the vehicle vertical direction and connecting the upper wall (54) and the lower wall (55).

7. The attachment structure according to claim 1, wherein the at least one tentative attachment portion includes
a fitting hole (40X) arranged in a first member, which is one of the hood lock device (30) and the attachment portion (20; 50X; 60X), wherein the fitting hole (40X) extends in the vehicle transverse direction, and
a fitting projection (23X, 24X; 51X, 24X; 61X, 62X) arranged on a second member,
which is the other one of the hood lock device (30) and the attachment portion (20; 50X; 60X), wherein the fitting projection (23X, 24X; 51X, 24X; 61X, 62X) projects toward the first member,
wherein the fitting projection (23X, 24X; 51X, 24X; 61X, 62X) is fitted in the fitting hole (40X) in a state in which the attachment portion (20; 50X; 60X) and the hood lock device (30) are movable relative to each other in the vehicle transverse direction.

8. The attachment structure according to claim 7, wherein the at least one tentative attachment portion is one of two tentative attachment portions, and the two tentative attachment portions are respectively arranged at a vehicle-right portion and a vehicle-left portion of the hood lock device (30).

9. The attachment structure according to claim 7 or 8, wherein
the fitting projection (23X, 24X) includes an engagement portion (25B) configured to enter the fitting projection (23X, 24X) while being elastically deformed, and
when the fitting projection (23X, 24X) is fitted in the fitting hole (40X), the engagement portion (25B) is engaged with an open edge of the fitting hole (40X) and projected from the fitting hole (40X).

10. The attachment structure according to any one of claims 1 to 9, wherein the attachment portion (20; 40; 70; 90; 100; 110; 130; 50X; 60X) is a radiator core support (14) formed from a synthetic resin.

## Patentansprüche

1. Befestigungsstruktur einer Motorhaubenverriegelungsvorrichtung (30; 50; 60; 80; 120), wobei die Motorhaubenverriegelungsvorrichtung (30; 50; 60; 80; 120) so konfiguriert ist, dass sie an einem Befestigungsabschnitt (20; 40; 70; 90; 100; 110; 130; 50X; 60X) befestigt werden kann, der an einem Fahrzeughauptkörper angeordnet ist und so konfiguriert ist, dass er mit einem Motorhaubenanschlag (13) in Eingriff gebracht werden kann, der an einer Innenfläche einer Motorhaube (12) eines Fahrzeugs (10) angeordnet ist, um die Motorhaube (12) in einem geschlossenen Zustand zu verriegeln, wobei die Befestigungsstruktur umfasst:
mindestens einen vorläufigen Befestigungsabschnitt, der so konfiguriert ist, dass er die Motorhaubenverriegelungsvorrichtung (30; 50; 60; 80; 120) an dem Befestigungsabschnitt (20; 40; 70; 90; 100; 110; 130; 50X; 60X) unter Verwendung einer Montagekraft in einem Zustand vorläufig befestigt, in dem der Befestigungsabschnitt (20; 40; 70; 90; 100; 110; 130; 50X; 60X) und die Motorhaubenverriegelungsvorrichtung (30; 50; 60; 80; 120) relativ zueinander in einer Fahrzeugquerrichtung bewegbar sind.

2. Befestigungsstruktur nach Anspruch 1, wobei der mindestens eine vorläufige Befestigungsabschnitt einer von zwei vorläufigen Befestigungsabschnitten ist und die beiden vorläufigen Befestigungsabschnitte jeweils an einem fahrzeugrechten Abschnitt und einem fahrzeuglinken Abschnitt der Motorhaubenverriegelungsvorrichtung (30; 50; 60; 80; 120) angeordnet sind.

3. Befestigungsstruktur nach Anspruch 1 oder 2, wobei der mindestens eine vorläufige Befestigungsabschnitt Folgendes umfasst
zwei Eingriffsstücke (23, 24; 41, 45; 71, 72; 84, 85), die an einem ersten Element angeordnet sind, das eines von dem Befestigungsabschnitt (20; 40; 70; 90) und der Motorhaubenverriegelungsvorrichtung (30; 50; 60; 80) ist, wobei sich die beiden Eingriffsstücke (23, 24; 41, 45; 71, 72; 84, 85) in Fahrzeugquerrichtung an in einer vertikalen Fahrzeugrichtung beabstandeten Positionen erstrecken, und
einen Eingriffsabschnitt (36, 37; 51, 52; 61, 62; 92), der an einem zweiten Element angeordnet ist, das das andere von dem Befestigungsabschnitt (20; 40; 70; 90) und der Motorhaubenverriegelungsvorrichtung (30; 50; 60; 80) ist, wobei sich der Eingriffsabschnitt (36, 37; 51, 52; 61, 62; 92) in der Fahrzeugquerrichtung erstreckt und so konfiguriert ist, dass er zwischen den beiden Eingriffsstücken (23, 24; 41, 45; 71, 72; 84, 85) gehalten wird.

4. Befestigungsstruktur nach Anspruch 3, wobei
der Eingriffsabschnitt (51, 52) eine Endfläche aufweist, die dem ersten Element gegenüberliegt, wenn die Motorhaubenverriegelungsvorrichtung (50) versuchsweise an dem Befestigungsabschnitt (20) angebracht wird, und
die Endfläche des Eingriffsabschnitts (51, 52) eine Fläche aufweist, die an einer Fahrzeugoberseite und einer Fahrzeugunterseite von dem ersten Element weg gekrümmt ist.

5. Befestigungsstruktur nach Anspruch 3 oder 4, wobei das Eingriffsstück (41, 45) in Fahrzeugquerrichtung gesehen einen S-förmigen Querschnitt aufweist.

6. Befestigungsstruktur nach einem der Ansprüche 3 bis 5, wobei der Eingriffsabschnitt (51, 52) eine obere Wand (54), die an einer Fahrzeugoberseite angeordnet ist und sich in einer Fahrzeugfront-Heck-Richtung erstreckt, eine untere Wand (55), die an einer Fahrzeugunterseite angeordnet ist und sich in der Fahrzeugfront-Heck-Richtung erstreckt, und eine Basiswand (53), die sich in der vertikalen Fahrzeugrichtung erstreckt und die obere Wand (54) und die untere Wand (55) verbindet, umfasst.

7. Befestigungsstruktur nach Anspruch 1, wobei der mindestens eine vorläufige Befestigungsabschnitt Folgendes umfasst
ein Montageloch (40X), das in einem ersten Element angeordnet ist, das entweder die Motorhaubenverriegelungsvorrichtung (30) oder der Befestigungsabschnitt (20; 50X; 60X) ist, wobei sich das Montageloch (40X) in der Fahrzeugquerrichtung erstreckt, und
einen Befestigungsvorsprung (23X, 24X; 51X, 24X; 61X, 62X), der an einem zweiten Element angeordnet ist, das das andere der Motorhaubenverriegelungsvorrichtung (30) und des Befestigungsabschnitts (20; 50X; 60X) ist, wobei der Befestigungsvorsprung (23X, 24X; 51X, 24X; 61X, 62X) in Richtung des ersten Elements vorsteht,
wobei der Befestigungsvorsprung (23X, 24X; 51X, 24X; 61X, 62X) in das Montageloch (40X) in einem Zustand eingepasst ist, in dem der Befestigungsabschnitt (20; 50X; 60X) und die Motorhaubenverriegelungsvorrichtung (30) relativ zueinander in der Fahrzeugquerrichtung beweglich sind.

8. Befestigungsstruktur nach Anspruch 7, wobei der mindestens eine vorläufige Befestigungsabschnitt einer von zwei vorläufigen Befestigungsabschnitten ist und die beiden vorläufigen Befestigungsabschnitte jeweils an einem fahrzeugrechten Abschnitt und einem fahrzeuglinken Abschnitt der Motorhaubenverriegelungsvorrichtung (30) angeordnet sind.

9. Befestigungsstruktur nach Anspruch 7 oder 8, wobei
der Befestigungsvorsprung (23X, 24X) einen Eingriffsabschnitt (25B) aufweist, der so konfiguriert ist, dass er in den Befestigungsvorsprung (23X, 24X) eintritt, während er elastisch verformt wird, und
wenn der Befestigungsvorsprung (23X, 24X) in das Montageloch (40X) eingepasst ist, der Eingriffsabschnitt (25B) mit einer offenen Kante des Montagelochs (40X) in Eingriff steht und aus dem Montageloch (40X) herausragt.

10. Befestigungsstruktur nach einem der Ansprüche 1 bis 9, wobei der Befestigungsabschnitt (20; 40; 70; 90; 100; 110; 130; 50X; 60X) ein Heizkörperkernträger (14) ist, der aus einem Kunstharz gebildet ist.

## Revendications

1. Structure de fixation d'un dispositif de verrouillage de capot (30 ; 50 ; 60 ; 80 ; 120), dans laquelle le dispositif de verrouillage de capot (30 ; 50 ; 60 ; 80 ; 120) est configuré pour être fixé à une partie de fixation (20 ; 40 ; 70 ; 90 ; 100 ; 110 ; 130 ; 50X ; 60X) disposée sur le corps principal d'un véhicule et configurée pour être engagée avec une gâche de capot (13) disposée sur une surface intérieure d'un capot (12) d'un véhicule (10) pour verrouiller le capot (12) à l'état fermé, la structure de fixation comprenant :
au moins une partie de fixation provisoire configurée pour fixer provisoirement le dispositif de verrouillage du capot (30 ; 50 ; 60 ; 80 ; 120) à la partie de fixation (20 ; 40 ; 70 ; 90 ; 100 ; 110 ; 130 ; 50X ; 60X) à l'aide d'une force d'ajustement dans un état dans lequel la partie de fixation (20 ; 40 ; 70 ; 90 ; 100 ; 110 ; 130 ; 50X ; 60X) et le dispositif de verrouillage du capot (30 ; 50 ; 60 ; 80 ; 120) sont mobiles l'un par rapport à l'autre dans une direction transversale du véhicule.

2. Structure de fixation selon la revendication 1, dans laquelle l'au moins une partie de fixation provisoire est l'une des deux parties de fixation provisoire, et les deux parties de fixation provisoire sont respectivement disposées sur une partie droite du véhicule et une partie gauche du véhicule du dispositif de verrouillage du capot (30 ; 50 ; 60 ; 80 ; 120).

3. Structure de fixation selon la revendication 1 ou 2, dans laquelle au moins une partie de fixation provisoire comprend
deux pièces d'engagement (23, 24 ; 41, 45 ; 71, 72 ; 84, 85) disposées sur un premier élément, qui est l'un de la partie de fixation (20 ; 40 ; 70 ; 90) et du dispositif de verrouillage du capot (30 ; 50 ; 60 ; 80), dans lequel les deux pièces d'engagement (23, 24 ; 41, 45 ; 71, 72 ; 84, 85) s'étendent dans la direction transversale du véhicule à des positions espacées dans une direction verticale du véhicule, et
une partie d'engagement (36, 37 ; 51, 52 ; 61, 62 ; 92) disposée sur un second élément, qui est l'autre de la partie de fixation (20 ; 40 ; 70 ; 90) et du dispositif de verrouillage du capot (30 ; 50 ; 60 ; 80), dans lequel la partie d'engagement (36, 37 ; 51, 52 ; 61, 62 ; 92) s'étend dans la direction transversale du véhicule et est configurée pour être maintenue entre les deux pièces d'engagement (23, 24 ; 41, 45 ; 71, 72 ; 84, 85).

4. Structure de fixation selon la revendication 3, dans laquelle
la partie d'engagement (51, 52) comprend une surface d'extrémité opposée au premier élément lors de la fixation provisoire du dispositif de verrouillage du capot (50) à la partie de fixation (20), et
la surface d'extrémité de la partie d'engagement (51, 52) comprend une surface qui est courbée à l'opposé du premier élément sur un côté supérieur du véhicule et sur un côté inférieur du véhicule.

5. Structure de fixation selon la revendication 3 ou 4, dans laquelle la pièce d'engagement (41, 45) a une section transversale en forme de S vue dans la direction transversale du véhicule.

6. Structure de fixation selon l'une des revendications 3 à 5, dans laquelle la partie d'engagement (51, 52) comprend une paroi supérieure (54) disposée sur le côté supérieur du véhicule et s'étendant dans la direction avant-arrière du véhicule, une paroi inférieure (55) disposée sur le côté inférieur du véhicule et s'étendant dans la direction avant-arrière du véhicule, et une paroi de base (53) s'étendant dans la direction verticale du véhicule et reliant la paroi supérieure (54) et la paroi inférieure (55).

7. Structure de fixation selon la revendication 1, dans laquelle au moins une partie de fixation provisoire comprend
un trou de fixation (40X) aménagé dans un premier élément, qui est l'un du dispositif de verrouillage du capot (30) et de la partie de fixation (20 ; 50X ; 60X), dans lequel le trou de fixation (40X) s'étend dans la direction transversale du véhicule, et
une saillie de fixation (23X, 24X ; 51X, 24X ; 61X, 62X) disposée sur un second élément, qui est l'autre du dispositif de verrouillage de la capuche (30) et de la partie de fixation (20 ; 50X ; 60X), dans lequel la saillie de fixation (23X, 24X ; 51X, 24X ; 61X, 62X) fait saillie vers le premier élément,
dans lequel la saillie de fixation (23X, 24X ; 51X, 24X ; 61X, 62X) est montée dans le trou de fixation (40X) lorsque la partie de fixation (20 ; 50X ; 60X) et le dispositif de verrouillage du capot (30) sont mobiles l'un par rapport à l'autre dans la direction transversale du véhicule.

8. Structure de fixation selon la revendication 7, dans laquelle au moins une partie de fixation provisoire est l'une des deux parties de fixation provisoire, et les deux parties de fixation provisoire sont respectivement disposées à une partie droite du véhicule et à une partie gauche du véhicule du dispositif de verrouillage du capot (30).

9. Structure de fixation selon la revendication 7 ou 8, dans laquelle
la saillie de fixation (23X, 24X) comprend une partie d'engagement (25B) configurée pour entrer dans la saillie de fixation (23X, 24X) tout en étant élastiquement déformée, et
lorsque la saillie de fixation (23X, 24X) est montée dans le trou de fixation (40X), la partie d'engagement (25B) est engagée dans un bord ouvert du trou de fixation (40X) et projetée hors du trou de fixation (40X).

10. Structure de fixation selon l'une des revendications 1 à 9, dans laquelle la partie de fixation (20 ; 40 ; 70 ; 90 ; 100 ; 110 ; 130 ; 50X ; 60X) est un support de noyau de radiateur (14) formé à partir d'une résine synthétique.
